(19) **Europäisches Patentamt / European Patent Office / Office européen des brevets**

(11) **EP 1 920 525 B1**

(12) **EUROPÄISCHE PATENTSCHRIFT**

(45) Veröffentlichungstag und Bekanntmachung des Hinweises auf die Patenterteilung:
**11.11.2009  Patentblatt 2009/46**

(21) Anmeldenummer: **06791692.4**

(22) Anmeldetag: **28.08.2006**

(51) Int Cl.:
***H02M 3/335*** (2006.01)

(86) Internationale Anmeldenummer:
**PCT/EP2006/008410**

(87) Internationale Veröffentlichungsnummer:
**WO 2007/025702 (08.03.2007 Gazette 2007/10)**

(54) **STEUERUNGSANORDNUNG FÜR EINEN SPANNUNGSKONVERTER UND VERFAHREN**

CONTROL SYSTEM FOR A VOLTAGE CONVERTER AND METHOD

DISPOSITIF DE COMMANDE CONÇU POUR UN CONVERTISSEUR DE TENSION, ET PROCEDE

(84) Benannte Vertragsstaaten:
**DE FR GB**

(30) Priorität: **29.08.2005  DE 102005040876**

(43) Veröffentlichungstag der Anmeldung:
**14.05.2008  Patentblatt 2008/20**

(73) Patentinhaber: **austriamicrosystems AG**
**8141 Unterpremstätten (AT)**

(72) Erfinder: **TRATTLER, Peter**
**A-8055 Graz (AT)**

(74) Vertreter: **Epping - Hermann - Fischer**
**Patentanwaltsgesellschaft mbH**
**Ridlerstrasse 55**
**80339 München (DE)**

(56) Entgegenhaltungen:
WO-A-97/13314      DE-A1- 3 615 168
US-A- 5 138 543      US-A1- 2003 141 853

• O'LOUGHLIN M: "CIRCUIT PROVIDES LEADING-EDGE BLANKING" EDN ELECTRICAL DESIGN NEWS, REED BUSINESS INFORMATION, HIGHLANDS RANCH, CO, US, Bd. 48, Nr. 12, 29. Mai 2003 (2003-05-29), Seite 74,76, XP001169391 ISSN: 0012-7515

**Beschreibung**

Die vorliegende Erfindung betrifft eine Schaltungsanordnung für einen Spannungskonverter zum Wandeln einer ersten Gleichspannung in eine zweite Gleichspannung, einen Spannungskonverter und ein Verfahren zum Konvertieren einer ersten Gleichspannung in eine zweite Gleichspannung.

Spannungskonverter, die zum Wandeln einer ersten Gleichspannung in eine zweite Gleichspannung dienen, benötigen üblicherweise eine Steuerungsanordnung für ihren Betrieb, um ein aktives Bauelement in dem Spannungskonverter mit einem Steuersignal zu beaufschlagen. Spannungskonverter können sowohl zum Abwärtswandeln einer Gleichspannung wie auch zum Erzeugen einer höheren Gleichspannung eingesetzt werden. Sie werden auch als Gleichspannungswandler, englisch direct current / direct current converter, abgekürzt DC/DC Wandler bezeichnet. Dazu werden üblicherweise Transformatoren verwendet. Eine Primärseite des Transformators wird mit einer Spannungsquelle gekoppelt, während an einer Sekundärseite des Transformators die erzeugte Spannung abgreifbar ist.

Das Dokument US 6,518,733 B1 zeigt einen Schaltkreis und Methoden für Schaltkreise zum Laden von Kondensatoren. Der Schaltkreis zeigt einen Transformator mit einer Primär- und einer Sekundärseite. Ein Strom fließt von einer Spannungsquelle über die Primärseite des Transformators und durch einen Bipolar-Transistor sowie einen ersten Widerstand nach Masse ab. Ein Anschluss der Sekundärseite ist über einen zweiten Widerstand mit Masse verbunden. Die Spannungen über dem ersten und dem zweiten Widerstand werden abgegriffen und zur Steuerung verwendet. Die Schaltung setzt somit Signale von der Primär- und der Sekundärseite des Transformators zur Steuerung des Spannungskonverters ein.

Das Dokument US 2003/0 141 853 offenbart eine Steuerschaltung, die unter Verwendung primärseitiger Signale die Schaltsignale einstellt.

Aufgabe der vorliegenden Erfindung ist es, eine Steuerungsanordnung zu schaffen, mit der ein Spannungskonverter zum Wandeln einer ersten Gleichspannung in eine zweite Gleichspannung mit geringem Aufwand steuerbar ist, sowie einen Spannungskonverter und ein Verfahren mit je geringem Aufwand zum Konvertieren einer ersten Gleichspannung in eine zweite Gleichspannung bereitzustellen.

Diese Aufgaben werden mit dem Gegenstand des unabhängigen Patentanspruchs 1 sowie des Patentanspruchs 10 und dem Verfahren gemäß dem unabhängigen Patentanspruch 15 gelöst. Weiterbildungen und Ausgestaltungen sind Gegenstand der abhängigen Ansprüche.

Erfindungsgemäß wird die Aufgabe bezüglich der Anordnung durch eine Steuerungsanordnung zum Wandeln einer ersten Gleichspannung in eine zweite Gleichspannung gelöst, die einen ersten Eingang, einen ersten Ausgang, eine Recheneinheit und einen ersten Vergleicher aufweiset.

Der erste Eingang der Steuerungsanordnung ist ausgelegt zu einer Verbindung mit einem Mittel zum Erfassen eines ersten Stroms. Der erste Strom ist auf einer Primärseite eines gemäß dem vorgeschlagenen Prinzip an die Steuerungsanordnung anschließbaren Transformators abgreifbar, welcher zum Konvertieren einer ersten Gleichspannung in eine zweite Gleichspannung anschließbar ist.

Der erste Ausgang der Steuerungsanordnung ist zur Verbindung mit einem Steueranschluss eines an die Steuerungsanordnung anschließbaren Transistors ausgelegt. Eine gesteuerte Strecke des Transistors ist in Serie zu der Primärseite des Transformators schaltbar. Der erste Ausgang ist zur Abgabe eines Steuersignals an den Steueranschluss des Transistors eingerichtet.

Die Recheneinheit ist mit dem ersten Ausgang der Steuerungsanordnung verbunden. Sie ist zur Einstellung des Steuersignals des Transistors derart eingerichtet, dass eine gesteuerte Strecke des Transistors in deren Anschaltphase mit einer Anschaltdauer einen niedrigeren Widerstandswert verglichen mit dem Widerstandswert in deren Ausschaltphase mit einer Ausschaltdauer zeigt.

Der erste Vergleicher ist an einem ersten Eingang mit dem ersten Eingang der Steuerungsanordnung verbunden. Der erste Eingang der Steuerungsanordnung dient zur Zuführung eines Wertes des ersten Stroms oder eines von dem Wert des ersten Stroms abgeleiteten Werts an den ersten Vergleicher. Ein einstellbarer Sollwert ist dem ersten Vergleicher an seinem zweiten Eingang zuführbar. Der erste Vergleicher umfasst einen Ausgang, welcher mit einem Eingang der Recheneinheit gekoppelt ist.

Der Ausgang des ersten Vergleichers dient zum Einstellen der Ausschaltdauer der gesteuerten Strecke des Transistors. Die Steuerungsanordnung erzeugt somit ein Steuersignal, das die gesteuerte Strecke des Transistors abwechselnd in einen Zustand mit einem niedrigen und in einen Zustand mit einem hohen Widerstandswert schaltet.

Die Steuerungsanordnung ist derart eingerichtet, dass dem Transformator Energie in der Anschaltphase primärseitig zuführbar ist und dem Transformator Energie insbesondere in der Ausschaltphase sekundärseitig entnehmbar ist. In der Anschaltphase fließt somit auf der Primärseite der erste Strom, der mit zunehmender Zeitdauer ansteigen kann. In der Ausschaltphase dagegen ist der erste Strom praktisch nicht vorhanden, während ein auf einer Sekundärseite des Transformators fließender zweiter Strom verhältnismäßig hoch ist. In der Anschaltphase ergibt sich im wesentlichen der Energieinhalt des Transformators aus einem Wert des ersten Stroms, während in der Ausschaltphase der gleiche Energieinhalt des Transformators näherungsweise den zweiten Strom ergibt. Ein Verhältnis des zweiten Stroms zu Beginn der Ausschaltphase zu dem ersten Strom zu dem Ende der Anschaltphase hängt von einem Verhältnis einer Induktivität auf der Primärseite zu einer Induktivität auf der Sekundärseite und damit von einem Verhältnis einer Windungszahl auf der Primärseite zu einer Windungszahl auf der Sekundärseite ab. Der zweite Strom nimmt mit zunehmender Zeitdauer während der Ausschaltphase ab. Dies kann durch Aufladen eines weiteren energiespeichernden Bauelementes wie eines Kondensators, Ohm'sche Verluste, Verluste in einem nachschaltbaren Gleichrichter oder durch Entnahme durch eine Last hervorgerufen sein.

Ein Wert des ersten Stroms zu Beginn der Anschaltphase ist abhängig von dem Wert des zweiten Stroms am Ende der Ausschaltphase. Weiter ist der Wert des ersten Stroms zu Beginn der Anschaltphase von dem Kehrwert des Verhältnisses der Induktivität auf der Primärseite zu der Induktivität auf der Sekundärseite und damit von dem Kehrwert des Verhältnisses der Windungszahl auf der Primärseite zu der Windungszahl auf der Sekundärseite abhängig. Dies ist dadurch verursacht, dass sich der Energieinhalt des Transformators zum Ende der Ausschaltphase in der Höhe des zweiten Stroms und bei Beginn der Anschaltphase in der Höhe des ersten Stroms widerspiegelt.

Um einen effizienten Aufladevorgang zu erreichen, sinkt vorteilhafterweise der zweite Strom in der Ausschaltphase nicht unter einen Mindestwert. Die Steuerungsanordnung ist daher eingerichtet, die Ausschaltdauer herabzusetzen, sodass der zweite Strom nicht unter den Mindestwert am Ende der Ausschaltphase absinken kann. Hierfür ist der Vergleicher dazu ausgelegt, einen Wert des ersten Stroms oder einen Wert, welcher von dem Wert des ersten Stroms ableitbar ist, mit dem einstellbaren Sollwert zu verglichen. Die Steueranordnung ist zur Einstellung einer kürzeren Ausschaltdauer eingerichtet, wenn der Wert des ersten Stromes beziehungsweise der von dem Wert des ersten Stromes abgeleitete Wert kleiner als der einstellbare Sollwert ist. Daher ist die Steueranordnung dazu ausgelegt, die folgende Ausschaltphase gegenüber der vorigen Ausschaltphase in diesem Fall zu verkürzen.

Die Steueranordnung ist zur Einstellung einer längeren Ausschaltdauer eingerichtet, sofern der Wert des ersten Stroms beziehungsweise der von dem Wert des ersten Stroms abgeleitete Wert größer als der einstellbare Sollwert ist. Deshalb ist die Steueranordnung ausgelegt, die folgende Ausschaltphase gegenüber der vorigen Ausschaltphase zu verlängern.

Das Anschalten und das Ausschalten der gesteuerten Strecke des Transistors kann ein sich periodisch wiederholender Vorgang sein, der von der Steueranordnung mittels des Steuersignals gesteuert ist. Die Ausschaltdauer ist von dem Wert des ersten Stroms beziehungsweise von dem Wert, der von dem Wert des ersten Stroms abgeleitetet ist, abhängig und ist mittels der hier dargelegten Anordnung eingestellt.

Mit Vorteil wird folglich durch die Steuerungsanordnung erreicht, dass der zweite Strom nicht unter eine einstellbare Schwelle sinkt. Dazu ist die Ausschaltdauer von der Steuerungsanordnung jeweils geeignet geregelt.

In einer Weiterbildung umfasst die Steuerungsanordnung einen Mittelwertbildner. Der Mittelwertbildner ist zwischen dem ersten Eingang der Steuerungsanordnung und dem ersten Eingang des ersten Vergleichers geschaltet. Der Mittelwertbildner ist eingerichtet zur Ermittelung eines Mittelwerts aus dem Wert des ersten Stroms während einer Anschaltphase und aus mindestens einem zeitlich in derselben Anschaltphase folgenden weiteren Werts des ersten Stroms.

Der Mittelwertbildner kann als Tiefpassfilter ausgebildet sein, dem mehrere aufeinanderfolgende Werte des ersten Stroms während der Anschaltphase zugeführt sind. Durch das Tiefpassfilter ist mit Vorteil ein Einfluss einer Störung, die von dem Umschalten hervorgerufen sein kann, verringert. Das Tiefpassfilter kann als passiver Tiefpass oder alternativ als aktiver Tiefpass ausgebildet sein.

Der Mittelwertbildner kann alternativ als Integrator ausgebildet sein, welcher mehrere aufeinanderfolgende Werte des ersten Stroms während der Anschaltphase integriert. Der Integrator kann ausgebildet sein, Werte des ersten Stroms während der gesamten Anschaltphase zu integrieren. Alternativ kann er ausgebildet sein, Werte erst nach dem Abklingen von eventuellen Störungen zu erfassen.

In einer Weiterbildung kann der Integrator ausgelegt sein, nach einer einstellbaren Wartezeit für das Abklingen von eventuell vorhandenen Störungen für eine einstellbare Dauer zu integrieren, wobei die Dauer kleiner als die zu erwartende Anschaltdauer abzüglich der Wartezeit einstellbar ist.

In einer Ausführungsform ist der Integrator zusätzlich als Halteelement ausgebildet und dazu ausgelegt, sein Ausgangssignal nach einem Ende der Integration bis zu einem Beginn der nächsten Integration zu halten.

In einer anderen Ausführungsform umfasst die Steuerungsanordnung eine Verzögerungseinrichtung. Die Verzögerungseinrichtung dient zur Ermittlung des Werts des ersten Stroms derart, dass mittels der Verzögerungseinrichtung der erste Strom mit einer einstellbaren Verzögerungsdauer gegenüber dem Beginn der Anschaltphase abgetastet ist. Die Verzögerungseinrichtung ist zwischen dem ersten Eingang der Steuerungsanordnung und dem ersten Eingang des ersten Vergleichers geschaltet. Die einstellbare Verzögerungsdauer kann 0 betragen. Mit Vorteil ist die einstellbare Verzögerungsdauer jeweils größer 0, so dass eine gegebenenfalls vorhandene Störung zu Beginn der Anschaltphase vor dem Ermitteln des Werts des ersten Stroms abgeklungen ist.

In einer Ausführungsform umfasst die Verzögerungseinrichtung eine Abtast-Halte-Schaltung. Mit dieser Schaltung kann der Wert des ersten Stromes beziehungsweise der von dem Wert des ersten Stroms abgeleitete Wert mit der einstellbaren Verzögerungsdauer gegenüber dem Beginn der Anschaltphase ermittelt und festgehalten werden, bis ein neuer Wert in einer folgenden Anschaltphase ermittelt wird.

In einer Weiterbildung umfasst die Recheneinheit einen Mikrocontroller.

In einer anderen Ausführungsform umfasst die Recheneinheit mehrere miteinender verknüpfte Digitalgatter zum Bereitstellen des Steuersignals wechselweise für die Anschaltphase und für die Ausschaltphase mit der gesteuerten Ausschaltdauer.

In einer weiteren Ausführungsform umfasst die Recheneinheit zusätzlich zu Digitalgattern auch Analoggatter. Analoggatter können zum Bereitstellen eines Steuersignal in der Anschaltphase mit einem einstellbarem Spannungs- oder Stromwert ausgelegt sein. Alternativ oder zusätzlich können Analoggatter zum Bereitstellen eines Steuersignal in der Ausschaltphase mit einem einstellbaren Spannungs- oder Stromwert vorgesehen sein. Analoggatter können zur Realisierung der Anschaltdauer und der Ausschaltdauer vorgesehen sein.

In einer Ausführungsform ist die Recheneinheit zur Weiterverarbeitung eines ersten Signals, das an dem Ausgang des ersten Vergleichers abgreifbar ist, eingerichtet. Die Recheneinheit ist ausgelegt, die Ausschaltdauer für die nächste Ausschaltphase beziehungsweise einen diese Ausschaltdauer repräsentierenden Wert aus dem ersten Signal zu ermitteln.

In einer alternativen Ausführungsform umfasst die Steuerungsanordnung einen Analogregler, der eingangsseitig mit dem Ausgang des ersten Vergleichers und ausgangsseitig mit einem Eingang der Recheneinheit gekoppelt ist. Der Analogregler dient zur Ermittlung eines die Ausschaltdauer repräsentierenden ersten Signals. Der Sollwert des Regelkreises ist der einstellbare Sollwert, der dem zweiten Eingang des ersten Vergleichers zugeführt ist. Der Regelkreis umfasst den Analogregler, die Recheneinheit, die gesteuerte Strecke des Transistors, den Transformator, das Mittel zum Erfassen eines ersten Stroms und den ersten Vergleicher, der ausgangsseitig zum Schließen des Regelkreises mit dem Analogregler gekoppelt ist. Zwischen dem Mittel zum Erfassen eines ersten Stroms und dem ersten Vergleicher kann der Mittelwertbildner, die Verzögerungseinrichtung oder der Integrator geschaltet sein.

Der Analogregler kann als Proportional-Regler, abgekürzt P-Regler, ausgebildet sein. Alternativ kann der Analogregler als Proportional-Integral-Regler, abgekürzt PI-Regler, ausgeführt sein. In einer anderen Ausführungsform kann der Analogregler als Proportional-Integral-Differential-Regler, abgekürzt PID-Regler, ausgebildet sein.

Die Steuerungsanordnung kann an einem Anschluss mit einem Versorgungspotentialanschluss und an einem weiteren Anschluss mit einem Bezugspotentialanschluss verbunden sein. In einer Ausführungsform ist der Versorgungspotentialanschluss mit einer Batterie koppelbar.

Die Anschaltdauer kann einen konstanten einstellbaren Wert betragen.

In einer Weiterbildung ist die Steuerungsanordnung dazu eingerichtet, dass der Transistor von der Anschaltphase in die Ausschaltphase schaltbar ist, sobald der erste Strom oder der davon abgeleitete Wert in der Anschaltphase einen einstellbaren Stromgrenzwert überschreitet. Mit Vorteil ist somit der erste Strom und damit eine einer Batterie entnommene Leistung sowie ein Energieinhalt des Transformators begrenzbar.

In einer Ausführungsform dieser Weiterbildung umfasst die Steuerungsanordnung einen zweiten Vergleicher, der an seinem Ausgang mit einem weiteren Eingang der Recheneinheit gekoppelt ist. Der Vergleicher ist an seinem ersten Eingang mit dem ersten Eingang der Steuerungsanordnung verbunden. Dem Vergleicher wird daher der Wert des ersten Stroms beziehungsweise ein davon abgeleiteter Wert des ersten Stroms an dem ersten Eingang zugeführt. An einem zweiten Eingang des Vergleichers ist der einstellbare Stromgrenzwert anlegbar. Der Vergleicher gibt ausgangsseitig ein Signal ab, das in Abhängigkeit von dem Wert des ersten Stroms beziehungsweise dem von dem ersten Strom abgeleiteten Wert und dem einstellbaren Stromgrenzwert gebildet ist. Somit kann mit Vorteil die Steuerungsanordnung ausgelegt sein, nach Erreichen des Stromgrenzwertes die Anschaltphase zu beenden. Vorteilhafterweise kann unter der Voraussetzung eines sekundärseitigen Leerlaufs in der Anschaltphase der Transformator zu Ende der Anschaltphase jeweils den gleichen Energieinhalt aufweisen.

In einer Weiterbildung umfasst die Steuerungsanordnung einen zweiten Eingang. Der zweite Eingang ist zur Zuführung einer zweiten Spannung eingerichtet, welche zwischen einem ersten und einem zweiten primärseitigen Anschluss des Transformators abgreifbar ist. Alternativ ist die Steuerungsanordnung eingerichtet zu einer Zuführung einer weiteren Spannung an dem zweiten Eingang, welche von der zweiten Spannung ableitbar ist.

An die Steueranordnung ist die Primärseite des Transformators anschließbar, welcher zum Wandeln der ersten Gleichspannung in die zweite Gleichspannung dient. Die zweite Gleichspannung kann somit eine sekundärseitig im Betrieb auftretende Spannung sein. In einer Weiterbildung ist die Steuerungsanordnung eingerichtet, die Ausschaltphase des Transistors um eine einstellbare Verlängerungsdauer zu verlängern, wenn die zweite Gleichspannung einen Vorgabewert erreicht. Es ist ein Vorteil dieser Weiterbildung, dass dadurch die zweite Gleichspannung limitiert wird.

In einer Ausführungsform dieser Weiterbildung ist die Steuerungsanordnung dazu ausgelegt, die Ausschaltphase des Transistors um die einstellbare Verlängerungsdauer zu verlängern, wenn die zweite Spannung oder die von der zweiten Spannung abgeleitete weitere Spannung während der Ausschaltphase einen ersten einstellbaren Spannungsgrenzwert erreicht.

In einer Ausführungsform der Weiterbildung der Steuerungsanordnung mit der einstellbaren Verlängerungsdauer umfasst die Steuerungsanordnung einen dritten Vergleicher. Der dritte Vergleicher ist an einem ersten Eingang mit dem zweiten Eingang der Steuerungsanordnung gekoppelt. Dem dritten Vergleicher ist an einem zweiten Eingang der erste einstellbare Spannungsgrenzwert zuführbar. Der dritte Vergleicher ist an einem Ausgang mit der Recheneinheit verbunden und zur Abgabe eines dritten Signals ausgelegt. Das dritte Signal dient zur Verlängerung der Ausschaltphase um die einstellbare Verlängerungsdauer in Abhängigkeit des Vergleichs der zweiten Spannung oder der von der zweiten Spannung abgeleiteten Spannung und dem ersten einstellbaren Spannungsgrenzwert.

In einer Weiterbildung ist die Steuerungsanordnung ausgelegt, einen Widerstandswert der gesteuerten Strecke des Transistors während des Übergangs von der Anschalt- zur Ausschaltphase einzustellen. Die Steuerungsanordnung ist zum Einstellen des Widerstandswerts derart ausgelegt, dass die zweite Spannung oder die von der zweiten Spannung abgeleitete Spannung einen zweiten einstellbaren Spannungsgrenzwert nicht überschreitet. Mit Vorteil kann damit ein Risiko reduziert sein, dass der Spannungskonverter mit einer Spannungsüberhöhung mit zudem hohem Anstieg spannungsempfindliche Bauelemente oder Personen gefährdet.

In einer Ausführungsform dieser Weiterbildung umfasst hierfür die Steuerungsanordnung einen vierten Vergleicher. Der vierte Vergleicher ist an einem ersten Eingang mit dem zweiten Eingang der Steuerungsanordnung gekoppelt. Dem vierten Vergleicher ist an einem zweiten Eingang der zweite einstellbare Spannungsgrenzwert zugeführt. An einem Ausgang ist der vierte Vergleicher mit der Recheneinheit verbunden derart, dass der Widerstandswert des Transistors in Abhängigkeit von dem Vergleich der zweiten Spannung oder der von der zweiten Spannung abgeleiteten Spannung mit dem zweiten einstellbaren Spannungsgrenzwert regelbar ist.

In einer alternativen Ausführungsform dieser Weiterbildung weist der zweite einstellbare Spannungsgrenzwert den gleichen Wert wie der erste einstellbare Spannungsgrenzwert auf, so dass der dritte Vergleicher zur Realisierung dieser Weiterbildung einsetzbar ist. In dieser alternativen Ausführungsform kann mit Vorteil auf den vierten Vergleicher verzichtet werden.

Der erste und/oder der zweite und/oder der dritte und/oder der vierte Vergleicher kann ausgebildet sein, an seinem Ausgang Digitalsignale oder alternativ Signale, die einem Wert 1, -1 und 0 entsprechen, abzugeben. Der erste und/oder der zweite und/oder der dritte und/oder der vierte Vergleicher kann als Komparator ausgeführt sein.

In einer bevorzugten Ausführungsform ist der erste und/oder der vierte Vergleicher ausgelegt, als Ausgangssignal ein Analogsignal bereitzustellen, das eine Differenz der Signale an seinem ersten und seinem zweiten Eingang repräsentiert. Der erste und/oder der vierte Vergleicher kann dazu als Differenzverstärker ausgelegt sein. Mit Vorteil sind somit der Recheneinheit das erste Signal und/oder das vierte Signal in Analogform zugeführt und sind zur präzisen Regelung des Steuersignals einsetzbar.

In einer Ausführungsform ist die Recheneinheit derart ausgestaltet, dass sie ein Steuersignal bildet, welches den Transistor mit geringer Flankensteilheit abschaltet. Die Recheneinheit kann dazu ein Tiefpassglied zur Beeinflussung der Zeitkonstante des Abschaltens umfassen. Mit Vorteil kann das Tiefpassglied zusätzlich auch zum Verlangsamen des Anschaltens vorgesehen sein. Mit Vorteil ist damit bei dem Abschalten und bei dem Anschalten eine störende Abstrahlung reduziert. Das Tiefpassglied kann als Widerstands-Kondensator-Glied, abgekürzt RC-Glied, realisiert sein.

In einer Ausführung des vorgeschlagenen Prinzips ist ein Spannungskonverter vorgesehen. Der Spannungskonverter umfasst den Transformator, den Transistor, das Mittel zum Erfassen eines ersten Stroms, eine Gleichrichterschaltung und die Steueranordnung. Die Gleichrichterschaltung ist mit einer Sekundärseite des Transformators gekoppelt. Am Ausgang der Gleichrichterschaltung ist die zweite Gleichspannung, also eine Ausgangsspannung des Spannungskonverters, abgreifbar. An ihrem ersten Ausgang ist die Steuerungsanordnung mit dem Steueranschluss des Transistors verbunden.

In einer Ausführungsform umfasst das Mittel zum Erfassen eines ersten Stroms einen ersten Widerstand, der in Serie zu dem Transformator und dem Transistor geschaltet ist. Die Steuerungsanordnung ist an ihrem ersten Eingang mit einem Anschluss des ersten Widerstands gekoppelt. Mit Vorteil ist ein Widerstandswert des ersten Widerstands so klein gewählt, dass die ohm'schen Verluste gering sind.

In einer Ausführungsform umfasst die Gleichrichterschaltung eine Diode und einen Kondensator, die in Serie zueinander geschaltet sind. Die Serienschaltung aus der Diode und dem Kondensator ist mit einem ersten und einem zweiten sekundärseitigen Anschluss des Transformators gekoppelt. Über dem Kondensator ist die zweite Gleichspannung abgreifbar. Aufgrund der hohen Kosten für Bauelemente, welche für höhere Spannungen geeignet sind, ist die Anzahl der Bauelemente der Gleichrichterschaltung vorteilhafterweise klein gehalten.

Die Diode der Gleichrichterschaltung ist in einer bevorzugten Ausführungsform derart mit dem ersten und dem zweiten Anschluss der Sekundärseite des Transformators verbunden, dass die Diode insbesondere in der Ausschaltphase bezüglich des zweiten Stroms in Durchlassrichtung geschaltet ist.

In einer Weiterbildung umfasst die Gleichrichterschaltung einen Brückengleichrichter oder eine Mittelpunktschaltung. Es ist ein Vorteil dieser Weiterbildung, dass die Brückengleichrichterschaltung und die Mittelpunktschaltung symmetrisch aufgebaut sind, sodass die Anschlüsse der Gleichrichterschaltung mit dem ersten und dem zweiten sekundärseitigen Anschluss des Transformators vertauschbar verbunden sein können.

Der Transistor kann als Analogschalter oder als elektronischer Schalter realisiert sein.

Der Transistor kann als Bipolartransistor ausgeführt sein. In einer anderen Ausführungsform ist der Transistor als Feldeffekttransistor ausgeführt. In einer Weiterbildung ist der Transistor als N-Kanal-Feldeffekttransistor realisiert. In einer bevorzugten Ausführungsform ist der Transistor als N-Kanal-Metall-Oxid-Halbleiter-Feldeffekttransistor ausgeführt.

In einer Ausführungsform ist die Steuerungsanordnung auf einem Halbleiterkörper integriert. Damit sind für die Realisierung der Steuerungsanordnung und für die Realisierung des Transistors spezialisierte Herstellungstechnologien einsetzbar. Der Transistor kann in einer Leistungstransistor-Technologie ausgeführt sein.

In einer anderen Ausführungsform ist der Transistor zusammen mit der Steuerungsanordnung auf einem Halbleiterkörper realisiert. Es ist ein Vorteil dieser Ausführungsform, dass dadurch die gesamte Anzahl der Anschlüsse im Spannungskonverter reduziert und die Steuerungsordnung speziell für den auf dem selben Chip vorgesehenen Transistor auslegbar ist.

Der Spannungskonverter kann zur Erzeugung einer höheren Spannung eingesetzt sein. Die höhere Spannung kann in einer beispielhaften Ausführungsform 100 bis 400 Volt betragen.

Der Transformator kann in einer beispielhaften Ausführungsform ein Wicklungsverhältnis von 1:20 bis 1:100 aufweisen.

Der Spannungskonverter kann vorteilhafterweise zur Erzeugung einer Spannung zum Betrieb einer Xenon-Lampe verwendet sein. Der Spannungskonverter kann mit Vorteil in einem Gerät der mobilen Kommunikationstechnik Verwendung finden.

Der Spannungskonverter kann mit besonderem Vorteil in einem Gerät der mobilen Kommunikationstechnik eingesetzt sein, um eine höhere Spannung für eine Blitzlampe bereitzustellen.

Der Spannungskonverter ist vorteilhaft in einer Digitalkamera einsetzbar.

Bezüglich des Verfahrens wird die Aufgabe durch ein Verfahren zum Konvertieren einer ersten Gleichspannung in eine zweite Gleichspannung gelöst, mit folgenden Schritten:

Während einer Anschaltdauer einer Anschaltphase wird eine erste Gleichspannung einer Primärseite eines Transformators zugeführt, um Energie in dem Transformator zu speichern. Dazu wird ein Transistor in einem niederohmigen Zustand betrieben. Der Transistor ist in eine der Zuleitungen der ersten Gleichspannung zu der Primärseite des Transformators geschaltet. Durch die Primärseite des Transformators fließt ein erster Strom.

In einer Ausschaltphase des Transistors mit einer Ausschaltdauer wird Energie auf einer Sekundärseite des Transformators abgegeben. Dazu wird der Transistor in einem hochohmigen Zustand betrieben. Die Ausschaltdauer wird aus einem Wert des ersten Stroms in der Anschaltphase oder aus einem Wert, der von dem Wert des ersten Stroms in der Anschaltphase ableitbar ist, ermittelt. Die zweite Gleichspannung wird durch ein Gleichrichten eines zweiten Stroms, der von der Sekundärseite des Transformators abgegeben wird, generiert.

Somit ist mit Vorteil die Ausschaltdauer durch Abgreifen von auf der Primärseite zur Verfügung stehender Größen einstellbar. Es ist ein Vorteil des Verfahrens, dass zur Steuerung des Transistors keine sekundärseitige Größen abzugreifen sind.

Eine alternative Ausführungsform eines Verfahrens zum Konvertieren einer ersten Gleichspannung in eine zweite Gleichspannung nach dem vorgeschlagenen Prinzip umfasst folgende Schritte:

Periodisches An- und Ausschalten eines ersten Stroms, der durch eine Primärseite eines Transformators fließt,

- Messen des ersten Stroms bei angeschaltetem ersten Strom,
- Steuern einer Ausschaltdauer des Ausschaltens in Abhängigkeit der Messung,
- Gleichrichten eines zweiten Stroms, der durch eine Sekundärseite eines Transformators fließt.

Zusammenfassend hat das vorgeschlagene Prinzip folgende Vorteile:

- Die Steuerungsanordnung benötigt keine Verbindung zu der Sekundärseite des Transformators, um Eingangssignale für die Steuerung abzugreifen.
- Auch der Spannungskonverter weist keine leitende Verbindung von der Sekundär- zur Primärseite des Transformators auf. Von der Sekundär- zur Primärseite besteht lediglich eine induktive Kopplung mittels des Transformators.
- Das Bezugspotenzial auf der Sekundärseite des Transformators ist somit vollkommen unabhängig von dem Bezugspotenzial auf der Primärseite des Transformators wählbar.
- Der Spannungskonverter benötigt nur wenige Bauelemente, die zur Beschaltung der Steuerungsanordnung und des

Transformators einzusetzen sind.

- Nur wenige Anschlüsse der Steuerungsanordnung sind vorzusehen.

- Durch die indirekte Bestimmung des Stroms auf der Sekundärseite des Transformators mittels eines Signals auf der Primärseite des Transformators kann eine schnelle Aufladezeit erreicht werden. Dies ist ohne eine Messung des Stromes auf der Sekundärseite möglich.

Die Erfindung wird nachfolgend an mehreren Ausführungsbeispielen anhand der Figuren näher erläutert. Funktions- beziehungsweise wirkungsgleiche Bauelemente tragen gleiche Bezugszeichen. Insoweit Schaltungsteile in Bauelementen und ihrer Funktion übereinstimmen, wird deren Beschreibung nicht in jeder der folgenden Figuren wiederholt.

Figuren 1A und 1B      zeigen jeweils beispielhafte Spannungs- konverter nach dem vorgeschlagenen Prin- zip.

Figuren 2A bis 2E      zeigen beispielhafte Ausführungsformen eines Teils der Steuerungsanordnung.

Figur 3      zeigt eine beispielhafte Ausführungsform eines Subtrahiergliedes.

Figur 4      zeigt eine beispielhafte Ausführungsform einer Recheneinheit.

Figur 5      zeigt beispielhafte Signalverläufe eines Spannungskonverters.

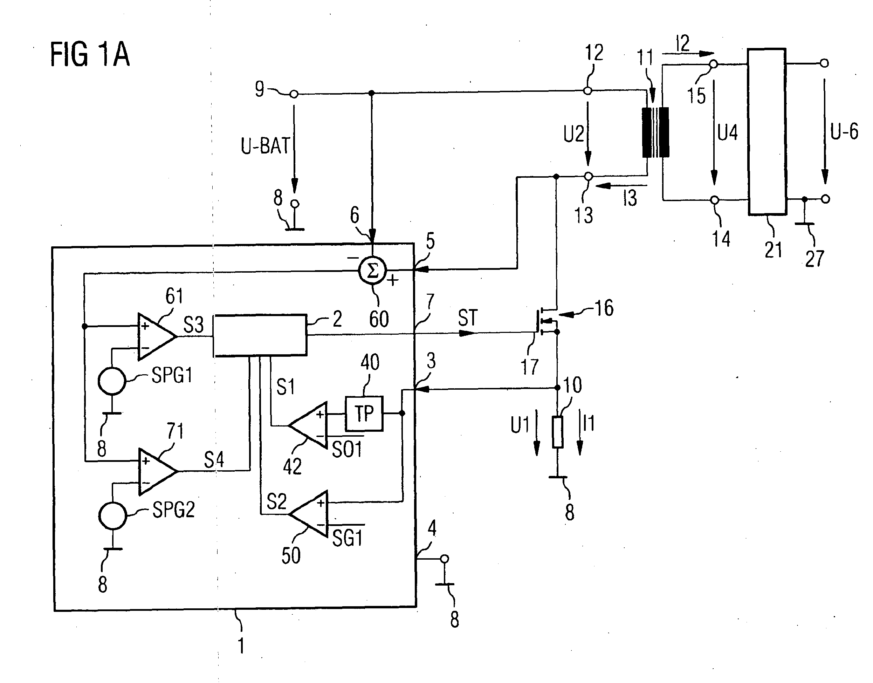

Figur 1A zeigt eine beispielhafte Ausführungsform des Spannungskonverters mit einer Steuerungsanordnung nach dem vorgeschlagenen Prinzip. Der Spannungskonverter umfasst einen Transformator 11, die Steuerungsanordnung 1, einen Gleichrichter 21 sowie weitere Bauelemente, die zwischen einer Primärseite des Transformators 11 und der Steuerungsanordnung 1 geschaltet sind.

Die Primärseite des Transformators 11 hat einen ersten primärseitigen Anschluss 12 und einen zweiten primärseitigen Anschluss 13. Die Primärseite des Transformators 11 ist in Serie mit einer gesteuerten Strecke eines Transistors 16 und einem ersten Widerstand 10 geschaltet. Der erste primärseitige Anschluss 12 des Transformators 11 ist mit einem Versorgungsspannungsanschluss 9 verbunden. Der erste Widerstand 10 ist an einem Anschluss mit dem Transistor 16 und an einem weiteren Anschluss mit einem Bezugspotentialanschluss 8 verbunden. Der Transistor 16 ist in der beispielhaften Ausführungsform gemäß Figur 1A als selbstsperrender N-Kanal-MetallOxid-Halbleiter-Feldeffekttransistor ausgebildet.

Ein Ausgang 7 der Steuerungsanordnung 1 ist an einen Steuereingang 17 des Transistors 16 angeschlossen. Ein Knoten zwischen dem Transistor 16 und dem ersten Widerstand 10 ist mit einem ersten Eingang 3 der Steuerungsanordnung 1 verbunden. Ein Knoten zwischen dem Transistor 16 und der Primärseite des Transformators 11 ist mit einem zweiten Eingang 5 der Steuerungsanordnung 1 verbunden. An einem dritten Eingang 6 ist die Steuerungsanordnung 1 mit dem Versorgungsspannungsanschluss 9 verknüpft. An einem vierten Eingang 4 ist die Steuerungsanordnung 1 mit dem Bezugspotenzialanschluss 8 verbunden.

Die Steuerungsanordnung 1 umfasst ein Tiefpassfilter 40, an dessen Ausgang ein erster Vergleicher 42 angeschlossen ist. Ein Eingang des Tiefpassfilters 40 ist mit dem Eingang 3 der Steuerungsanordnung 1 verbunden. Einem zweiten Eingang des ersten Vergleichers 42 ist ein einstellbarer Sollwert SO1 zugeführt. Ein Ausgang des ersten Vergleichers 42 ist mit einem Eingang einer Recheneinheit 2 verknüpft. Die Recheneinheit 2 ist ausgangsseitig mit dem Ausgang 7 der Steuerungsanordnung 1 verbunden.

Ein zweiter Vergleicher 50 ist an einem ersten Eingang mit dem ersten Eingang 3 der Steuerungsanordnung 1 verbunden. An einem zweiten Eingang des zweiten Vergleichers 50 ist ein Stromgrenzwert SG1 zugeführt. Der zweite Vergleicher 50 ist ausgangsseitig mit einem weiteren Eingang der Recheneinheit 2 verknüpft.

Die Steuerungsanordnung 1 umfasst weiter ein Subtrahierglied 60, dessen erster Eingang mit dem dritten Eingang 6 der Steuerungsanordnung 1 und dessen zweiter Eingang mit dem zweiten Eingang 5 der Steuerungsanordnung 1 verbunden ist. Ein Ausgang des Subtrahierglieds 60 ist mit einem ersten Eingang eines dritten Vergleichers 61 verbunden. An seinem zweiten Eingang ist der dritte Vergleicher 61 mit einem einstellbaren ersten Spannungsgrenzwert SPG1 beaufschlagt. Ein Ausgang des dritten Vergleichers 61 ist mit einem weiteren Eingang der Recheneinheit 2 verbunden.

Der Ausgang des Subtrahierglied 60 ist weiter mit einem ersten Eingang eines vierten Vergleichers 71 verbunden. Einem zweiten Eingang des vierten Vergleichers 71 wird ein einstellbarer zweiter Spannungsgrenzwert SPG2 zugeführt. Ein Ausgang des vierten Vergleichers 71 ist mit einem weiteren Eingang der Recheneinheit 2 verbunden.

Der Transformator 11 umfasst einen ersten und einen zweiten sekundärseitigen Anschluss 14, 15. An die Sekundärseite des Transformators 11 ist eine Gleichrichterschaltung 21, welche zwei Eingänge und zwei Ausgänge umfasst, angeschlossen. Ein Ausgang des Gleichrichters 21 ist mit einem weiteren Bezugspotenzialanschluss 27 verbunden. Der Bezugspotenzialanschluss 8 und der weitere Bezugspotenzialanschluss 27 sind in dem Spannungskonverter gemäß Figur 1A nicht verbunden. Primär- und Sekundärseite sind somit galvanisch getrennt.

An dem Versorgungsspannungsanschluss 9 wird eine erste Gleichspannung UBAT dem Spannungskonverter zugeleitet.

In einer Anschaltphase ist der Transistor 16 in einen niederohmigen Zustand geschaltet. In der Anschaltphase wird somit dem Transistor 16 an seinem Eingang 17 ein Steuersignal ST zugeführt, das höher als eine positive Schwellenspannung ist, da er als selbstsperrender N-Kanal-Metall-Oxid-Halbleiter-Feldeffekttransistor realisiert ist.

In der Anschaltphase fließt ein erster Strom I1 getrieben von der ersten Gleichspannung UBAT vom Versorgungsspannungsanschluss 9 über die Primärseite des Transformators 11 und durch den Transistor 16 sowie den ersten Widerstand 10 zum Bezugspotenzialanschluss 8. Damit ergibt sich näherungsweise folgende Gleichung für die Anschaltphase:

$$UBAT = U2 + UDS + U1 \, ,$$

wobei UBAT die erste Gleichspannung, U2 eine zweite Spannung, welche zwischen dem ersten und dem zweiten primärseitigen Anschluss 12, 13 des Transformators 11 abfällt, UDS eine Spannung über der gesteuerten Strecke des Transistors 16 und U1 eine Spannung ist, die über dem ersten Widerstand 10 abfällt.

Die Spannung U2 lässt sich in der Anschaltphase bei einem Leerlauf auf der Sekundärseite näherungsweise mit folgender Gleichung berechnen:

$$U2 = L_{11} \cdot \frac{dI1}{dt} \, ,$$

wobei U2 die Spannung über der Primärseite, L11 eine Induktivität der Primärseite und I1 der Strom ist, der durch die Primärseite des Transformators 11 fließt. In der Anschaltphase kann diese Bedingung erfüllt sein, da in der Anschaltphase der zweite Strom I2 einen Wert praktisch 0 in Abhängigkeit von der angeschlossenen Gleichrichterschaltung 21 haben kann.

Die Spannung U1 lässt sich mit folgender Gleichung berechnen:

$$U1 = I1 \cdot R10 \, ,$$

wobei U1 die Spannung über dem ersten Widerstand 10, R10 ein Widerstandswert des ersten Widerstands 10 und I1 der Strom ist, der durch die Primärseite des Transformators 11 sowie durch den ersten Widerstand 10 fließt.

Die erste Spannung U1 ist somit ein Maß für den durch die Primärseite des Transformators 11 fließenden Stroms I1 in der Anschaltphase. Die erste Spannung U1 wird der Steuerungsanordnung 1 an dem ersten Eingang 3 zugeführt. Das Tiefpassfilter 40 ist so ausgelegt, dass es während der Anschaltphase einen Mittelwert aufeinanderfolgender Werte der ersten Spannung U1 bildet. Der Mittelwert wird dann mittels des ersten Vergleichers 42 mit dem einstellbaren Sollwert SO1 verglichen. Von dem Ausgang des ersten Vergleichers 42 wird ein erstes Signal S1 abgegeben, das der Recheneinheit 2 zugeführt wird. Ist der Mittelwert kleiner als der Sollwert SO1, so wird von der Recheneinheit 2 die Ausschaltdauer T-OFF in der folgenden Ausschaltphase verkürzt gegenüber dem Wert in der vorigen Ausschaltphase. Ist der Mittelwert größer als der Sollwert SO1, so wird von der Recheneinheit 2 die Ausschaltdauer T-OFF der folgenden Ausschaltphase verlängert gegenüber dem Wert in der vorigen Ausschaltphase. Ist die folgende Ausschaltphase die erste Ausschaltphase nach einem Inbetriebsetzen des Spannungskonverters, so kann eine einstellbare Startdauer für die Ausschaltdauer T-OFF der Recheneinheit 2 zuführbar sein, welche die Recheneinheit 2 wie beschrieben mittels des in der ersten Anschaltphase auftretenden ersten Signals S1 vergrößert beziehungsweise verkleinert.

In der Anschaltphase steigt der erste Strom I1 an. Als Maß für den ersten Strom I1 wird die erste Spannung U1 dem zweiten Vergleicher 50 zugeführt. Der zweite Vergleicher 50 gibt an seinem Ausgang ein zweites Signal S2 ab, das der Recheneinheit 2 zugeführt wird. Überschreitet der erste Strom I1 den einstellbaren Stromgrenzwert SG1 beziehungsweise die erste Spannung U1 einen korrespondierenden Spannungsgrenzwert, so wird mittels des zweiten Vergleichers 50 und des zweiten Signals S2 die Recheneinheit 2 so angesteuert, dass sie ein Steuersignal ST zum Umschalten des Transistors 16 von dem niederohmigen Zustand in den hochohmigen Zustand abgibt und somit die gesteuerte Strecke des Transistors 16 von der Anschaltphase in die Ausschaltphase schaltet.

In der Ausschaltphase liegt primärseitig ein Leerlauf vor. Bei einem Leerlauf auf einer Seite eines Transformators lassen sich die Spannungen an der Primärseite und an der Sekundärseite mit folgender Gleichung näherungsweise berechnen:

$$U4/U2 = W2/W1,$$

wobei U2 die Spannung auf der Primärseite des Transformators 11, U4 eine Spannung auf der Sekundärseite des Transformators 11, W1 eine Anzahl der Windungen auf der Primärseite des Transformators 11 und W2 eine Anzahl der Windungen auf der Sekundärseite des Transformators 11 ist.

In der Ausschaltphase ist aufgrund des primärseitigen Leerlaufs der Wert der vierten Spannung U4 näherungsweise mit obiger Gleichung aus dem Wert der zweiten Spannung U2 bestimmbar. Dazu vergleicht das Subtrahierglied 60 in der Steuerungsanordnung 1 ein Potenzial an dem zweiten Eingang 5 mit einem Potenzial an dem dritten Eingang 6 der Steuerungsanordnung 1. An dem Ausgang des Subtrahierglieds 60 ist somit der negative Wert der zweiten Spannung U2 abgreifbar, die zwischen dem ersten und dem zweiten primärseitigen Anschluss auftritt.

Die zweite Spannung U2 kann zu Beginn der Ausschaltphase oder in der Ausschaltphase negative Werte annehmen. Die Kopplung des Subtrahierglied 60 mit dem zweiten und dem dritten Eingang 5,6 ist so gewählt, dass an seinem Ausgang eine positive Spannung abgreifbar ist.

Die zweite Spannung U2 wird von dem dritten Vergleicher 61 mit dem einstellbaren ersten Spannungsgrenzwert SPG1 verglichen. Der erste Spannungsgrenzwert SPG1 kann einen positiven Wert aufweisen. Das an dem Ausgang des dritten Vergleichers 61 anliegende dritte Signal S3 wird der Recheneinheit 2 zugeführt. Ist der Wert der zweiten Spannung U2 betragsmäßig höher als der erste einstellbare Spannungsgrenzwert SPG1, so wird mittels des dritten Vergleichers 61 und des Signals S3 die Recheneinheit 2 derart angesteuert, dass sie die Ausschaltphase um eine einstellbare Verlängerungsdauer T-R verlängert. Auf das Ende der verlängerten Ausschaltphase folgt eine weitere Anschaltphase. Dies bedeutet, dass die zweite Gleichspannung U-G einen maximalen Wert erreicht hat. Die Verlängerungsdauer T-R ist in dem beispielhaften Spannungskonverter nach Figur 1A länger als die Ausschaltdauer T-OFF.

Ist der Wert der zweiten Spannung U2 betragsmäßig kleiner als der erste einstellbare Spannungsgrenzwert SPG1, so wird die Ausschaltphase von der Recheneinheit 2 mittels des Steuersignals ST nach Ablauf der in der vorangegangenen Anschaltphase ermittelten Ausschaltdauer T-OFF beendet. Dies geschieht dadurch, dass das Steuersignal ST den Transistor 16 von dem hochohmigen in den niederohmigen Zustand schaltet.

In der Ausschaltphase wird die Spannung U4 auf der Sekundärseite des Transformators 11 in die zweite Gleichspannung U-G umgesetzt. An zwei Ausgängen der Gleichrichterschaltung 21 ist die zweite Gleichspannung U-G abgreifbar.

Durch ein sehr schnelles Ausschalten des Transistors 16 kann eine Überspannung zwischen dem ersten und dem zweiten primärseitigen Anschluss 12, 13 des Transformators 11 auftreten. Die Steuerungsanordnung 1 überwacht mithilfe der zweiten Spannung U2, die am zweiten und des dritten Eingangs 5 und 6 anliegt, des Subtrahierglieds 60 sowie des vierten Vergleichers 71 die Spannung auf der Primärseite des Transformators 11. Der vierte Vergleicher 71 gibt ein viertes Signal S4 ab, wenn die zweite Spannung U2 betragsmäßig einen zweiten einstellbaren Spannungsgrenzwert SPG2 überschreitet. Durch das vierte Signal S4 wird die Recheneinheit 2 so eingestellt, dass sie eine Steuerspannung ST abgibt, welche den Transistor 16 während der Anschaltphase so regelt, dass keine Überspannung auf der Primärseite auftreten kann. So kann mit Vorteil eine Gefährdung von Bauteilen oder Personen durch zu eine hohe Spannung oder einen zu schnellen Spannungsanstieg reduzierbar sein.

Bei der Erzeugung des Steuersignals ST kann in einer Ausführungsform der Spannungsabfall U1 über dem ersten Widerstand 10 berücksichtigt sein.

Es ist ein Vorteil der Steuerungsanordnung 1 und dem Spannungskonverter gemäß Figur 1A, dass ausschließlich Ströme und Spannungen auf der Primärseite des Transformators 11 zum Steuern der verschiedenen Phasen des Gleichrichtungsvorgangs abgegriffen werden. Mittels des ersten Signals S1 wird mit Vorteil die Ausschaltdauer T-OFF festgelegt, so dass die Zeitdauer des gesamten Ladevorgangs optimiert ist. Mittels des zweiten Signals S2 ist mit Vorteil der erste Strom I1 begrenzt, so dass der Leistungsverbrauch des Spannungskonverters und der Strom aus der Versorgungsspannung nicht zu groß wird. Es ist ein weiterer Vorteil der Strombegrenzung, dass die Wicklungen des Transformators 11 nicht zu warm werden. Mittels des dritten Signals S3 wird die Ausschaltdauer T-OFF wesentlich verlängert, so dass mit Vorteil eine zu hohe zweite Gleichspannung U-G vermieden wird und die Effizienz der Energieausnützung verbessert wird. Mittels des vierten Signals S4 wird das Ausschalten so gesteuert, dass mit Vorteil zu hohe Spannungen vermieden werden.

Der Bezugspotentialanschluss 8 und der weitere Bezugspotentialanschluss 27 können miteinander verbunden sein.

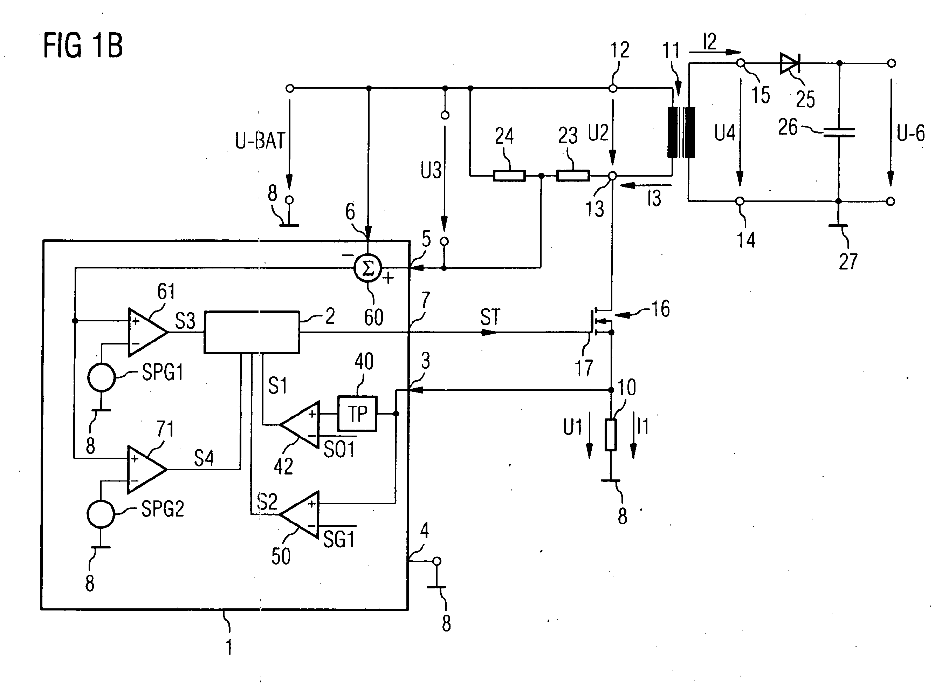

Figur 1B zeigt eine beispielhafte Weiterbildung des Spannungskonverters gemäß Figur 1A.

Die Gleichrichterschaltung 21 weist eine Serienschaltung, umfassend eine Diode 25 und einen Kondensator 26, auf. Die beiden Elektroden des Kondensators 26 sind mit zwei Anschlüssen verbunden, die zum Abgreifen der zweiten Gleichspannung U-G dienen. Die Diode 25 ist so geschaltet, dass sie während der Ausschaltphase leitend ist. Hierfür ist die Anode der Diode 25 mit einem zweiten sekundärseitigen Anschluss 15 eines Transformators 11 verbunden. Ein erster sekundärseitiger Anschluss 14 des Transformators 11 ist mit einer der beiden Elektroden des Kondensators 26 verbunden.

Ein Knoten zwischen dem Kondensator 26 und dem ersten sekundärseitigen Anschluss 14 des Transformators 11 ist mit dem weiteren Bezugspotenzialanschluss 27 verbunden. In dem Spannungskonverter gemäß Figur 1B ist mit Vorteil der weitere Bezugspotenzialanschluss 27 vom Bezugspotenzialanschluss 8 getrennt.

Ein zweiter Widerstand 23 ist zwischen dem zweiten primärseitigen Anschluss 13 und dem zweiten Eingang 5 der Schaltungsanordnung 1 geschaltet. Ein dritter Widerstand 24 ist zwischen dem Versorgungspotenzialanschluss 9 und dem zweiten Eingang 5 der Steuerungsanordnung 1 vorgesehen.

An der Serienschaltung aus der Diode 25 und dem Kondensator 26 liegt die sekundärseitig am Transformator 11 auftretende Spannung U4 an. Die Anode der Diode 25 ist derart an einen der beiden sekundärseitigen Anschlüsse 14, 15 des Transformators 11 angeschlossen, dass in der Ausschaltphase der zweite Strom I2 durch die Diode 25 fließen kann. Der Kondensator 26 wird vom zweiten Strom I2 aufgeladen, sodass die zweite Gleichspannung U-G erzeugt wird.

Die Serienschaltung aus dem zweiten Widerstand 23 und dem dritten Widerstand 24 bewirkt, dass der durch die Primärseite des Transformators 11 fließende Strom I3 während der Ausschaltphase nicht identisch Null ist. Der Strom I3 kann über die Serienschaltung aus dem zweiten und dem dritten Widerstand 23, 24 vom zweiten primärseitigen Anschluss 13 zu dem ersten primärseitigen Anschluss 12 zurückfließen. Zwischen dem dritten Anschluss 6 und dem zweiten Anschluss 5 ist somit eine Spannung U3 abgreifbar, welche eine von der zweiten Spannung U2 ableitbare Spannung ist. Mittels des zweiten und des dritten Widerstands 23, 24 kann vorteilhafterweise die Überspannung am primärseitigen Anschluss beim Übergang von der Anschalt- zur Ausschaltphase verringert sein.

Durch die Serienschaltung fließt in der Anschaltphase ebenfalls ein Strom. Mit Vorteil ist eine Summe der Widerstandswerte des zweiten und des dritten Widerstands 23, 24 so groß gewählt, dass die ohm'schen Verluste gering sind.

Der zweite Widerstand 23 dient mit Vorteil dem Schutz des zweiten Eingangs 5 der Steuerungsanordnung 1 vor einer zu hohen Spannungsbelastung.

Es ist ein Vorteil der Gleichrichterschaltung 21, dass für ihre Realisierung nur zwei Bauelemente vorgesehen sind. Von besonderem Vorteil ist dies bei Spannungskonvertern zur Erzeugung höherer Spannungen, da spannungsfeste Bauelemente aufwändiger zu realisieren sind.

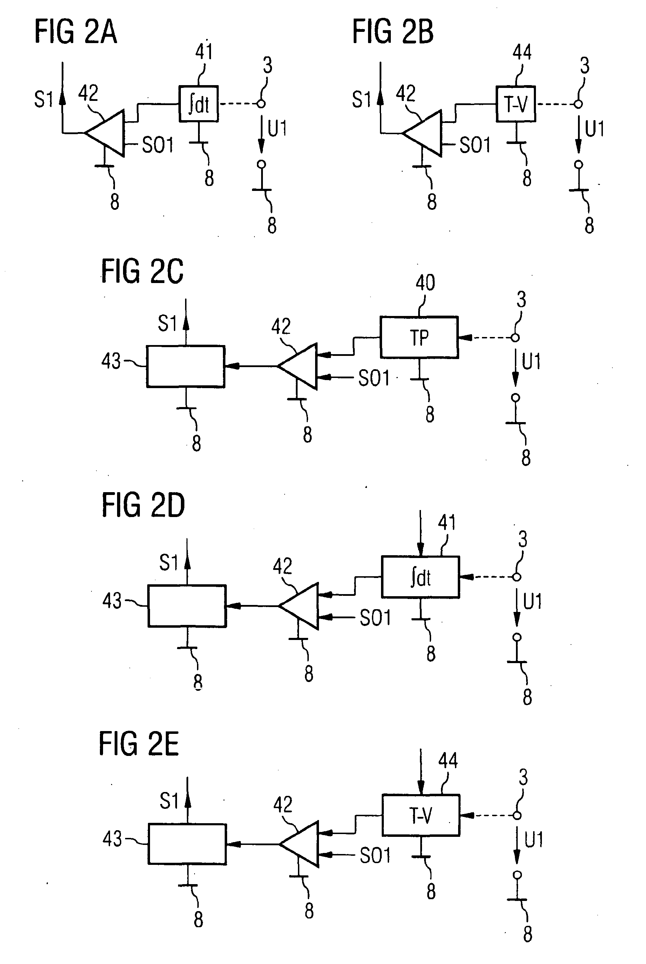

Figur 2A zeigt eine alternative Ausführungsform einer Schaltung, welche mit dem ersten Eingang 3 der Steuerungsanordnung 1 verbunden ist und ein erstes Signal S1 welches dem Eingang der Recheneinheit 2 zugeführt ist, erzeugt. Gemäß der Steuerungsanordnung 1 in Figur 1A und 1B ist hierzu ein Tiefpassfilter 40 und ein erster Vergleicher 42 vorgesehen.

In der alternativen Ausführungsform gemäß Figur 2A, wie sie in eine Steuerungsanordnung 1 gemäß den Figuren 1A und 1B einsetzbar ist, ist der Tiefpassfilter 40 von den Figuren 1A und 1B durch ein Integrator 41 ersetzt. Er ist dazu ausgelegt, ausschließlich Werte der ersten Spannung U1 während der Anschaltphase zu integrieren. Er ist weiter dazu ausgelegt, in der Ausschaltphase auf 0 zurückgesetzt zu werden.

Figur 2B zeigt eine andere, alternative Ausführungsform der obigen Schaltung gemäß Figur 2A. In der Schaltungsanordnung gemäß Figur 2B ist der Tiefpassfilter 40 von den Figuren 1A und 1B durch eine Verzögerungseinrichtung 44 ersetzt. Damit ist erreicht, dass ein Wert der ersten Spannung U1, welcher um eine einstellbare Verzögerungsdauer T-V gegenüber dem Beginn der Anschaltphase verzögert ist, dem ersten Eingang des ersten Vergleichers 42 zugeführt wird. Mit Vorteil weist die Verzögerungseinrichtung 44 eine Abtast- und Halteschaltung auf.

Die Figuren 2C bis 2E weisen zusätzlich zu den bisher gezeigten Ausführungsformen in den Figuren 1A und 1B beziehungsweise den Figuren 2A und 2B einen Analogregler 43 auf, der zwischen dem Ausgang des ersten Vergleichers 42 und einem Eingang der Recheneinheit 2 geschaltet ist. In Figur 2C ist der Tiefpassfilter 40, in Figur 2D ist der Integrator 41 und in Figur 2E ist die Verzögerungseinrichtung 44 dem ersten Eingang des Vergleichers 42 vorgeschaltet.

An einem Ausgang des Analogreglers 43 ist das Signal S1 abgreifbar, das in den Ausführungsformen gemäß den Figuren 2C bis 2E die Ausschaltdauer T-OFF repräsentiert. Somit ist die Recheneinheit 2 mit Vorteil entlastet, da der Analogregler 43 die Regelungsaufgaben übernimmt.

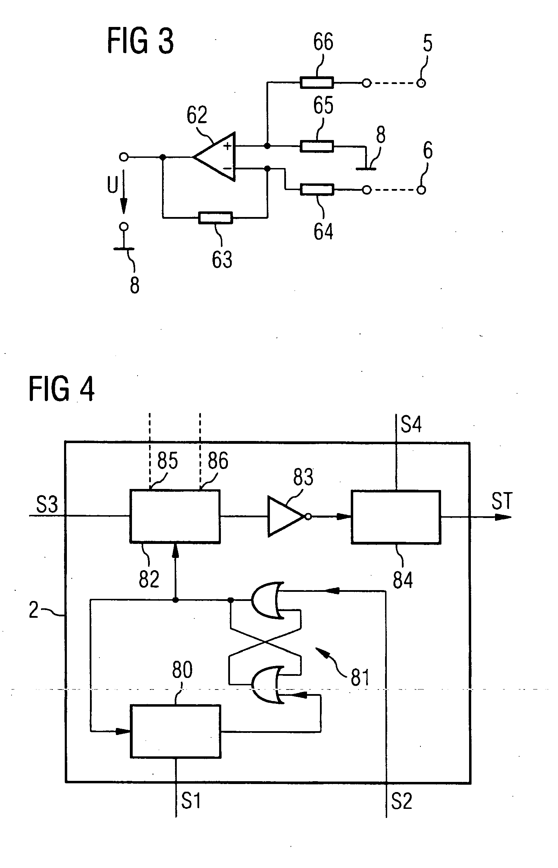

Figur 3 zeigt eine beispielhafte Ausführungsform eines Subtrahierglieds 60, wie es in den.Steueranordnungen 1 gemäß den Figuren 1A und 1B eingesetzt werden kann.

Das Subtrahierglied weist in der Schaltungsanordnung gemäß Figur 3 einen Operationsverstärker 62 auf. Ein nichtinvertierenden Eingang des Operationsverstärkers 62 ist über einen Widerstand 66 mit dem zweiten Eingang 5 der Steueranordnung 1 verbunden. Der nicht-invertierende Eingang des Operationsverstärkers 62 ist über einen Widerstand 65 an dem Bezugspotenzialanschluss 8 angeschlossen.

Ein invertierender Eingang des Operationsverstärkers 62 ist über einen Widerstand 64 mit dem dritten Eingang 6 der Steuerungsanordnung 1 verbunden. Der invertierende Eingang des Operationsverstärkers 62 ist über einen Widerstand 63 mit dem Ausgang des Operationsverstärkers, der damit den Ausgang des Subtrahierglieds 60 bildet, verknüpft.

Weisen die vier Widerstände den gleichen Widerstandswert auf, so ist eine Spannung am Ausgang näherungsweise gleich einer Differenz der Spannungen an den beiden Eingängen 5, 6.

Weist alternativ ein Verhältnis des Widerstandswertes des Widerstands 66 zu dem des Widerstands 65 einen Faktor k auf und weist ein Verhältnis des Widerstandswertes des Widerstands 64 zu dem des Widerstands 63 den gleichen Faktor k auf, so ist die Spannung am Ausgang näherungsweise gleich der Differenz der Spannungen an den beiden Eingängen 5, 6 dividiert durch den Faktor k. Mit einem Faktor k, der größer 1 ist, kann somit mit Vorteil eine hohe Spannungsdifferenz zwischen den Spannungen an dem zweiten und dritten Eingang 5, 6 reduziert sein. Somit ist mit Vorteil eine zwischen dem zweiten Eingang 5 und dem dritten Eingang 6 der Steuerungsanordnung 1 auftretende Spannung so aufbereitet, dass sie zwischen dem Ausgang des Operationsverstärkers 62 und dem Bezugspotenzialanschluss 8 abgreifbar ist und damit einfach weiterverarbeitbar ist.

Figur 4 zeigt eine beispielhafte Ausführungsform einer Recheneinheit 2, wie sie in den Steueranordnungen 1 gemäß den Figuren 1A und 1B einsetzbar ist.

Die Recheneinheit 2 umfasst eine Überspannungsschutzschaltung 82, die ausgangsseitig über einen Inverter 83 mit einer Treiberschaltung 84 verbunden ist. Die Überspannungsschutzschaltung 82 ist eingangsseitig mit einem Ausgang einer Kippstufe 81 verbunden. Der Ausgang der Kippstufe 81 ist über eine Verzögerungsschaltung 80 mit einem ersten Eingang der Kippstufe 81 gekoppelt. In der vorliegenden Ausführungsform ist die Kippstufe aus zwei miteinander verschalteten ODER-Gattern gebildet.

Der Recheneinheit 2 werden das erste, zweite, dritte und vierte Signal S1 bis S4 zugeleitet. Dazu weist die Recheneinheit 2 vier Steuereingänge auf. Das erste Steuersignal S1 wird der Verzögerungsschaltung 80 zugeführt und dient zum Einstellen der Ausschaltdauer T-OFF. In der beispielhaften Ausführungsform der Recheneinheit 2 verlängert ein erster Wert des ersten Steuersignals S1 die Ausschaltdauer T-OFF für den nächsten Zyklus; ein zweiter Wert des Steuersignals S1 verringert die Ausschaltdauer T-OFF für den nächsten Zyklus. Der erste Wert ist ein Wert high, der zweite Wert ein Wert low.

Das zweite Steuersignal S2 wird einem zweiten Eingang der Kippstufe 81 zugeführt und dient zum Beenden der Anschaltphase. Die Anschaltdauer T-ON wird somit von dem zweiten Steuersignal S2 bestimmt.

Das Signal an dem Ausgang der Kippstufe 81 wird somit einem Eingang der Verzögerungsschaltung 80 und einem Eingang der Überspannungsschutzschaltung 82 zugeführt. Der Überspannungsschutzschaltung 82 wird an einem weiteren Eingang das dritte Steuersignal S3 zugeleitet. Das dritte Steuersignal S3 dient zum Verlängern der Ausschaltphase um eine einstellbare Verlängerungsdauer T-R.

Der Treiberschaltung 84 wird an einem ersten Eingang ein Signal, das an einem Ausgang der Überspannungsschutzschaltung 82 anliegt und mittels dem Inverter 83 verarbeitet wird, zugeführt. An einem Ausgang der Treiberschaltung 84 ist das Steuersignal ST abgreifbar. Die Treiberschaltung 84 gibt ein analoges Signal an ihrem Ausgang ab, das den Transistor 16 entsprechend den Transistoreigenschaften in einen niederohmigen Zustand in der Anschaltphase und in einen hochohmigen Zustand in der Ausschaltphase versetzt.

An einem zweiten Eingang wird in diesem Beispiel der Treiberschaltung 84 das vierte Signal S4 zugeleitet. Das vierte Steuersignal S4 dient zum Einstellen des Widerstandswert der gesteuerten Strecke des Transistors 16 während dem Übergang von der Anschalt- zur Ausschaltphase. Der Widerstand der gesteuerten Strecke wird dadurch nur langsam erhöht.

Mittels der Recheneinheit 2 ist somit sowohl die Ausschaltdauer wie die Anschaltdauer und der Widerstandswert des Transistors in den verschiedenen Phasen mit Vorteil einstellbar.

Vorteilhafterweise wird die Anschaltphase beendet, wenn der erste Strom zu groß wird. Ebenso wird vorteilhafterweise die Ausschaltphase verkürzt, wenn aus einem Wert des ersten Stroms I1 ermittelbar ist, dass der zweite Strom I2 gegen Ende der Ausschaltphase zu klein ist. Durch die Verkürzung wird mit Vorteil die insgesamte Dauer für die Zeit zum Erzeugen der zweiten Gleichspannung U-G verringert. In Abhängigkeit von dem dritten Signals S3 wird die Ausschaltphase um die Verlängerungsdauer T-R verlängert und somit mit Vorteil einer Batterie, die an dem Versorgungsspannungsanschluss 9 angeschlossen ist, weniger Energie entnommen.

Optional kann die Überspannungsschutzschaltung 82 derart ausgelegt sein, dass die Verlängerungsdauer T-R mittels eines weiteren Einganges 85 der Überspannungsschutzschaltung 82 einstellbar ist. Der weitere Eingang 85 der Überspannungsschutzschaltung 82 ist mit einem weiteren Eingang der Steueranordnung 1 verbunden.

Optional kann die Überspannungsschutzschaltung 82 einen weiteren Eingang 86 aufweisen, welcher zur Zuführung einer Information dient, dass aufgrund eines Ereignisses bereits vor Ende der Verlängerungsdauer T-R in die Anschaltphase übergegangen wird. Ein derartiges Ereignis kann beispielsweise das Aussenden eines Blitzes von einer Lichtquelle sein, welche an die zweite Gleichspannung kurzzeitig angeschlossen wird. Im Falle eines durch ein Ereignis ausgelösten Abfallens der zweiten Gleichspannung wird von der Steuerungsanordnung 1 mit Vorteil vor dem Ende der Verlängerungsdauer T-R die Anschaltphase eingeleitet.

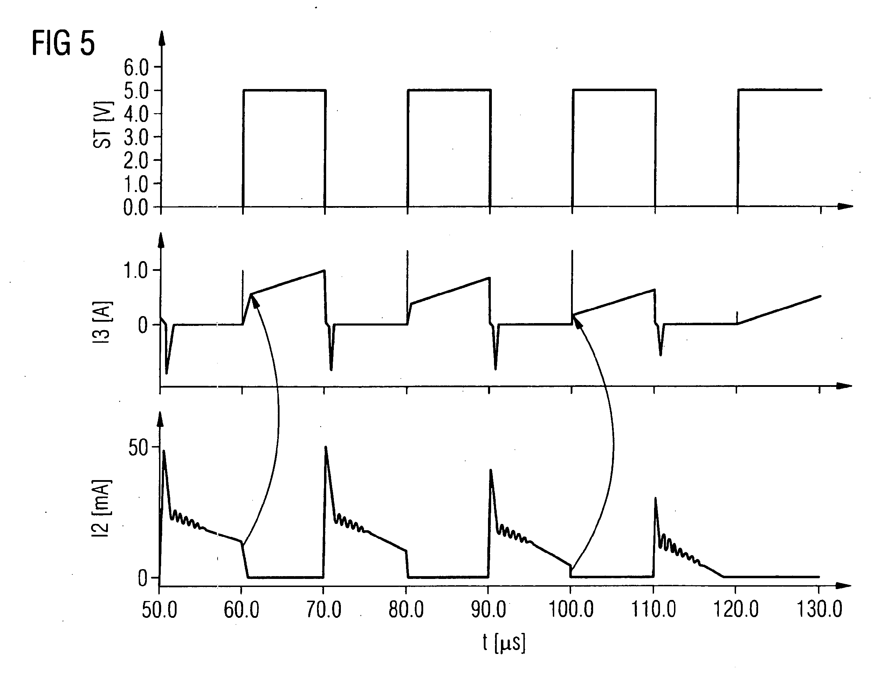

Figur 5 zeigt Signalverläufe eines Spannungskonverters gemäß einer Simulation.

Die Signalverläufe sind über der Zeit t aufgetragen. Der obere Signalverlauf zeigt das Steuersignal ST in Volt. In Figur 5 wird dieses Signal mit einer Periodendauer von 20 μsek eingeschaltet und ausgeschaltet. Die Anschaltdauer T-ON und die Ausschaltdauer T-OFF ist fest auf jeweils 10 μsek eingestellt. Figur 5 zeigt somit das Verhalten eines Spannungskonverters, der ähnlich zu dem Spannungskonverter gemäß Figur 1B aufgebaut ist, bei ausgeschalteter Regelung.

Der mittlere Signalverlauf zeigt einen Strom I3, welcher durch die Primärseite des Transformators 11 fließt. Während das Steuersignal 0 V zeigt, befindet sich der Spannungskonverter in der Ausschaltphase und ist der Strom I3 abgesehen von einer Stromspitze nach dem Ausschalten nahezu 0. Zu Beginn der Anschaltphase zeigt der Strom I3 einen kurzen Impuls, welcher von einem schnellen, steilen Anstieg auf einen ersten Stromwert gefolgt wird. Von diesem ersten Stromwert steigt der Strom I3 näherungsweise linear an. Am Ende der Anschaltphase und damit zu Beginn der Ausschaltphase fällt der Strom nach der Stromspitze beim Ausschalten auf 0 ab.

Im unteren Signalverlauf wird der zweite Strom I2 in Ampere, welcher auf der Sekundärseite des Transformators 11 abgreifbar ist, in Abhängigkeit von der Zeit t gezeigt. Zu Beginn der Ausschaltphase zeigt der Strom I2 in der Simulation eine Spitze, gefolgt von einigen Oszillationen. Der zweite Strom I2 nimmt danach näherungsweise linear mit der Zeit t ab. Zu Ende der Ausschaltphase hat der zweite Strom I2 in drei der vier gezeigten Ausschaltphasen noch einen Reststromwert.

Der Reststromwert bedeutet, dass magnetische Energie im Transformator 11 zum Ende der Ausschaltphase noch vorhanden ist. Aus diesem Grunde beginnt der Strom I3 zu Beginn der Anschaltphase nicht bei 0, sondern bei einem höheren Wert. Dies geschieht, da zu Beginn der Anschaltphase nun der Strom I3 den Energieinhalt des Transformators wiedergibt. Um eine hohe Effektivität der Spannungskonversion zu erreichen, ist mit Vorteil der zweite Strom I2 so einzustellen, dass er zu Ende der Ausschaltphase betragsmäßig größer 0 ist, sodass der Transformator 11 auch bei dem Ende der Ausschaltphase weiter eine magnetische Energie zeigt. Zu diesem Zweck wird die Ausschaltdauer T-OFF verkürzt.

Da der Spannungskonverter ausgelegt ist, auf Größen auf der Primärseite zuzugreifen, ist der zweite Strom I2 nicht für die Steuerung einsetzbar und es wird in einer Ausführungsform ein Einzelwert aus dem Strom I3 für die indirekte Bestimmung des zweiten Stroms I2 zum Ende der Ausschaltdauer herangezogen. Dies ist mit den beiden Pfeilen markiert. Es kann in einer Ausführungsform der Stromwert des Stroms I3 sein, der sich nach dem kurzen Impuls und nach dem schnellen, steilen Anstieg zu Beginn der Anschaltphase einstellt.

Für die Simulation der Signalverläufe in Figur 5 wurde aus Gründen der Übersichtlichkeit keine Regelung der Anschalt- oder der Ausschaltdauer T-ON, T-OFF entgegen dem Prinzip gemäß den Figuren 1A, 1B und 4 vorgenommen. Da die Anschaltdauer T-ON nicht geregelt ist, steigt der Strom I3 während der Anschaltphase auf unterschiedliche Werte an, die sich aus der Dauer der Anschaltphase ergeben. Die Anschaltphase wird somit zumindest in der letzten der vier gezeigten Anschaltphasen zu früh beendet.

Da die Ausschaltdauer T-OFF ebenfalls nicht geregelt ist, nimmt der Restwert des zweiten Stroms I2 zum Ende der Ausschaltphase von Periode zu Periode ab. Dies könnte durch eine längere Anschaltphase oder eine kürzere Ausschaltdauer T-OFF kompensiert werden.

Figur 5 zeigt somit, dass eine Regelung der Anschalt- und der Ausschaltdauer T-ON, T-OFF für die Energieeffizienz der Spannungskonversion von Vorteil ist.

Bezugszeichenliste

| | |
|---|---|
| 1 | Steuerungsanordnung |
| 2 | Recheneinheit |
| 3 | erster Eingang |
| 4 | vierter Eingang |
| 5 | zweiter Eingang |
| 6 | dritter Eingang |
| 7 | Ausgang |
| 8 | Bezugspotentialanschluss |
| 9 | Versorgungsspannungsanschluss |
| 10 | erster Widerstand |
| 11 | Transformator |
| 12 | erster primärseitiger Anschluss |

| | |
|---|---|
| 13 | zweiter primärseitiger Anschluss |
| 14 | erster sekundärseitiger Anschluss |
| 15 | zweiter sekundärseitiger Anschluss |
| 16 | Transistor |
| 17 | Steueranschluss |
| 21 | Gleichrichterschaltung |
| 23 | zweiter Widerstand |
| 24 | dritter Widerstand |
| 25 | Diode |
| 26 | Kondensator |
| 27 | weiterer Bezugspotentialanschluss |
| 40 | Tiefpassfilter |
| 41 | Integrator |
| 42 | erster Vergleicher |
| 43 | Analogregler |
| 44 | Verzögerungseinrichtung |
| 50 | zweiter Vergleicher |
| 60 | Subtrahier-Glied |
| 61 | dritter Vergleicher |
| 62 | Operationsverstärker |
| 63, 64, 65, 66 | Widerstand |
| 71 | vierter Vergleicher |
| 80 | Verzögerungsschaltung |
| 81 | Kippstufe |
| 82 | Überspannungsschutzschaltung |
| 83 | Inverter |
| 84 | Treiberschaltung |
| 85, 86 | Eingang |
| I1 | erster Strom |
| I2 | zweiter Strom |
| I3 | Strom |
| SG1 | Stromgrenzwert |
| SO1 | Sollwert |
| SPG1 | erster Spannungsgrenzwert |
| SPG2 | zweiter Spannungsgrenzwert |
| ST | Steuersignal |
| S1 | erstes Signal |
| S2 | zweites Signal |
| S3 | drittes Signal |
| S4 | viertes Signal |
| t | Zeit |
| T-OFF | Ausschaltdauer |
| T-ON | Anschaltdauer |
| T-R | Verlängerungsdauer |
| T-V | Verzögerungsdauer |
| UBAT | erste Gleichspannung |
| U-G | zweite Gleichspannung |
| U1 | erste Spannung |
| U2 | zweite Spannung |
| U3 | Spannung |

**Patentansprüche**

1. Steuerungsanordnung (1) für einen Spannungskonverter zum Wandeln einer ersten Gleichspannung (UBAT) in eine zweite Gleichspannung (U-G), umfassend

- einen ersten Eingang (3), eingerichtet zu einer Kopplung mit einem Mittel zum Erfassen eines ersten Stroms (I1) auf einer Primärseite eines Transformators (11), welcher zum Wandeln einer ersten Gleichspannung (UBAT) in eine zweite Gleichspannung (U-G) dient,

- einen ersten Ausgang (7), eingerichtet zur Kopplung mit einem Steueranschluss (17) eines Transistors (16), der in Serie zur der Primärseite des Transformators (11) schaltbar ist, und zur Abgabe eines Steuersignals (ST) an den Steueranschluss (17) des Transistors (16),

- eine Recheneinheit (2), gekoppelt mit dem ersten Ausgang (7) der Steuerungsanordnung (1), eingerichtet zum Einstellen des Steuersignals (ST) derart, dass der Transistor (16) einen niedrigen Widerstandswert in einer Anschaltphase mit einer Anschaltdauer (T-ON) und einen hohen Widerstandswert in einer Ausschaltphase mit einer Ausschaltdauer (T-OFF) aufweist,

- einen ersten Vergleicher (42) mit einem ersten Eingang, der mit dem ersten Eingang (3) der Steuerungsanordnung (1) gekoppelt ist zur Zuführung eines Werts des ersten Stroms (I1) oder eines von dem Wert des ersten Stroms (I1) abgeleiteten Werts, mit einem zweiten Eingang zur Zuführung eines einstellbaren Sollwerts (SO1) und mit einem Ausgang zur Abgabe eines ersten Signals (S1), der mit einem Eingang der Recheneinheit (2) gekoppelt ist zum Einstellen der Ausschaltdauer (T-OFF), **dadurch gekennzeichnet, dass** die Recheneinheit (2) umfasst:

- eine Verzögerungsschaltung (80), der das erste Signal (S1) zugeführt wird, das zum Einstellen der Ausschaltdauer (T-OFF) ausgelegt ist, und
- eine Kippstufe (81) mit einem Ausgang, der über die Verzögerungsschaltung (80) mit einem ersten Eingang der Kippstufe (81) gekoppelt ist.

2. Steuerungsanordnung nach Anspruch 1,
   wobei
   die Steuerungsanordnung (1) einen Mittelwertbildner, der zwischen dem ersten Eingang (3) der Steuerungsanordnung (1) und dem ersten Eingang des ersten Vergleichers (42) geschaltet ist, zur Ermittlung eines Mittelwerts aus dem Wert des ersten Stroms (I1) und aus mindestens einem zeitlich in der Anschaltphase folgenden weiteren Wert des ersten Stroms (I1) aufweist.

3. Steuerungsanordnung nach Anspruch 2,
   wobei
   der Mittelwertbildner ein Tiefpassfilter (40) oder einen Integrator (41) zur Mittelwertbildung umfasst.

4. Steuerungsanordnung nach Anspruch 1,
   wobei
   die Steuerungsanordnung (1) eine Verzögerungseinrichtung (44), die zwischen dem ersten Eingang (3) der Steuerungsanordnung (1) und dem ersten Eingang des ersten Vergleichers (42) geschaltet ist, zur Ermittlung des Werts des ersten Stroms (I1) durch Abtastung des ersten Stroms (I1) mit einer einstellbaren Verzögerungsdauer (T-V) gegenüber dem Beginn der Anschaltphase umfasst.

5. Steuerungsanordnung nach einem der Ansprüche 1 bis 4,
   wobei
   die Steuerungsanordnung (1) einen Analogregler (43) zur Ermittlung der Ausschaltdauer (T-OFF) umfasst, der eingangsseitig mit einem Ausgang des ersten Vergleichers (42) und ausgangsseitig mit der Recheneinheit (2) gekoppelt ist.

6. Steuerungsanordnung nach einem der Ansprüche 1 bis 5,
   wobei
   die Steuerungsanordnung (1) einen zweiten Vergleicher (50) umfasst, mit einem ersten Eingang, der mit dem ersten Eingang (3) der Steuerungsanordnung (1) gekoppelt ist zur Zuführung des ersten Stroms (I1) oder eines davon abgeleiteten Signals, mit einem zweiten Eingang zur Zuführung eines einstellbaren Stromgrenzwerts (SG1) und mit einem Ausgang, der mit einem weiteren Eingang der Recheneinheit (2) gekoppelt ist zum Schalten des Transistor (16) von der Anschaltphase in die Ausschaltphase in Abhängigkeit des Vergleichs des ersten Stroms (I1) oder des davon abgeleiteten Signals in der Anschaltphase mit dem einstellbaren Stromgrenzwert (SG1).

7. Steuerungsanordnung nach einem der Ansprüche 1 bis 6,
   wobei
   die Steuerungsanordnung (1) einen zweiten Eingang (5) umfasst, eingerichtet zu einer Zuführung einer zweiten Spannung (U2), die zwischen einem ersten und einem zweiten primärseitigem Anschluss (12, 13) des Transformators (11) abgreifbar ist, oder einer von der zweiten Spannung (U2) ableitbaren Spannung (U3) und gekoppelt mit der Recheneinheit (2).

8.  Steuerungsanordnung nach Anspruch 7,
    wobei
    die Steuerungsanordnung (1) einen dritter Vergleicher (61) umfasst, der an einem ersten Eingang mit dem zweiten Eingang (5) der Steuerungsanordnung (1) gekoppelt ist, dem an einem zweiten Eingang ein erster einstellbarer Spannungsgrenzwert (SPG1) zuführbar ist, und der an einem Ausgang mit der Recheneinheit (2) verbunden ist zur Verlängerung der Ausschaltphase um die einstellbare Verlängerungsdauer (T-R) in Abhängigkeit des Vergleichs der zweiten oder der davon abgeleiteten Spannung (U2, U3) und dem zweiten einstellbaren Spannungsgrenzwert (SPG2).

9.  Steuerungsanordnung nach Anspruch 7 oder 8,
    wobei
    die Steuerungsanordnung (1) einen vierten Vergleicher (71) umfasst, der an einem ersten Eingang mit dem zweiten Eingang (5) der Steuerungsanordnung (1) gekoppelt ist, dem an einem zweiten Eingang ein zweiter einstellbare Spannungsgrenzwert (SPG2) zuführbar ist, und der an einem Ausgang mit der Recheneinheit (2) verbunden ist zur Einstellung des Widerstandswerts des Transistors (16) in Abhängigkeit von dem Vergleich der zweiten oder der davon abgeleiteten Spannung (U2, U3) und dem zweiten einstellbaren Spannungsgrenzwert (SPG2).

10. Spannungskonverter mit einer Steuerungsanordnung nach einem der Ansprüche 1 bis 9,
    umfassend:

    - den Transformator (11),
    - den Transistor (16),
    - das Mittel zum Erfassen eines ersten Stroms (I1) auf einer Primärseite eines Transformators (11), umfassend einen ersten Widerstand (10), der in Serie zu der Primärseite des Transformators (11) und in Serie zu der gesteuerten Strecke des Transistors (16) geschaltet ist,
    - eine Gleichrichterschaltung (21), die mit einer Sekundärseite des Transformators (11) gekoppelt ist und an deren Ausgang die zweite Gleichspannung (U-G) abgreifbar ist,
    - die Steuerungsanordnung (1), die an ihrem ersten Eingang (3) mit einem Anschluss des ersten Widerstands (10) und an ihrem ersten Ausgang (7) mit dem Steueranschluss (17) des Transistors (16) gekoppelt ist.

11. Spannungskonverter nach Anspruch 7 und 10,
    wobei
    ein zweiter Widerstand (23) zwischen dem zweiten Eingang (5) der Steuerungsschaltung (1) und dem zweiten primärseitigen Anschluss (13) des Transformators (11) geschaltet ist.

12. Spannungskonverter nach Anspruch 7 und 10 oder nach Anspruch 7 und 11,
    wobei
    ein dritter Widerstand (24) zwischen dem zweiten Eingang (5) der Steuerungsschaltung (1) und dem ersten primärseitigen Anschluss (12) des Transformators (11) geschaltet ist.

13. Spannungskonverter nach einem der Ansprüche 10 bis 12,
    wobei
    die Gleichrichterschaltung (21) umfasst:

    - eine Diode (25) mit einer Anode, die mit einem sekundärseitigen Anschluss (15) des Transformators (11) verbunden ist, und
    - einen Kondensator (26) mit einer ersten Elektrode, die mit einer Kathode der Diode (25) verbunden ist, und mit einer zweiten Elektrode, die mit einem weiteren sekundärseitigen Anschluss (14) des Transformators (11) verbunden ist, wobei zwischen der ersten und der zweiten Elektrode des Kondensators (26) die zweite Gleichspannung (U-G) abgreifbar ist.

14. Spannungskonverter nach einem der Ansprüche 10 bis 13,
    wobei
    die Gleichrichterschaltung (21) eine Brückengleichrichterschaltung oder eine Mittelpunktschaltung umfasst.

**15.** Verfahren zum Konvertieren einer ersten Gleichspannung (UBAT) in eine zweite Gleichspannung (U-G), umfassend folgende Schritte:

- Speichern von Energie in einem Transformator (11) mittels Betreiben eines Transistors (16) in einem niederohmigen Zustand während einer Anschaltdauer (T-ON) einer Anschaltphase, wobei die erste Gleichspannung (UBAT) einem ersten und einem zweiten primärseitigen Anschluss (12, 13) des Transformators (11) zugeleitet wird und der Transistor (16) in eine der Zuleitungen geschaltet ist und durch eine Primärseite des Transformators (11) ein erster Strom (I1) fließt,
- Abgeben von Energie auf einer Sekundärseite des Transformators (11) mittels

- Betreiben des Transistors (16) in einem hochohmigen Zustand während einer Ausschaltdauer (T-OFF) einer Ausschaltphase, wobei die Ausschaltdauer (T-OFF) aus einem Wert des ersten Stroms (I1) in der Anschaltphase oder aus einem von dem Wert des ersten Stroms (I1) in der Anschaltphase ableitbaren Wert ermittelt wird, und
- Erzeugen der zweiten Spannung (U-G) durch Gleichrichten eines zweiten Stromes (I2), der von der Sekundärseite des Transformators abgegeben wird,

wobei ein Wert des ersten Stroms (I1) oder ein Wert, welcher von dem Wert des ersten Stroms (I1) ableitbar ist, mit einem einstellbaren Sollwert (SO1) mittels eines ersten Vergleichers (42) verglichen wird und ein erstes Signal (S1) an einem Ausgang des ersten Vergleichers (42) abgegeben wird, das zum Einstellen der Ausschaltdauer (T-OFF) vorgesehen ist und einer Verzögerungsschaltung (80), die einen Ausgang einer Kippstufe (81) mit einem ersten Eingang der Kippstufe (81) koppelt, zugeführt wird.

**16.** Verfahren nach Anspruch 15,
umfassend folgende Schritte
Ermitteln eines Mittelwertes des von dem Wert des ersten Stromes (I1) und aus mindestens einem zeitlich in der Anschaltphase folgenden weiteren Wert des ersten Stroms (I1) ableitbaren Wert zur Ermittelung der Ausschaltdauer (T-OFF).

**17.** Verfahren nach Anspruch 15,
umfassend folgende Schritte
Ermitteln des Wertes des ersten Stroms (I1) in der Anschaltphase durch Abtasten des ersten Stroms (I1) mit einer einstellbaren Verzögerungsdauer (T-V) gegenüber dem Beginn der Anschaltphase zur Ermittelung der Ausschaltdauer (T-OFF).

**18.** Verfahren nach einem der Ansprüche 15 bis 17,
umfassend folgende Schritte
Einstellen der Anschaltdauer (T-ON) derart, dass der erste Strom (I1) während der Anschaltphase betragsmäßig kleiner als ein einstellbarer erster Stromgrenzwert (SG1) ist.

**19.** Verfahren nach einem der Ansprüche 15 bis 18,
umfassend folgende schritte
Verlängern der Ausschaltphase um eine einstellbare Verlängerungsdauer (T-R), wenn die zweite Gleichspannung (U-G) in der Ausschaltphase betragsmäßig größer als ein einstellbarer erster Spannungsgrenzwert (SPG1) ist, und anschließendes Schalten in die Anschaltphase.

**20.** Verfahren nach einem der Ansprüche 15 bis 19,
umfassend folgende Schritte
Steuern des Transistors (16) durch Einstellen des Widerstandswertes einer gesteuerten Strecke des Transistors (16) während des Überganges von der Anschaltphase zu der Ausschaltphase derart, dass eine zweite Spannung (U2), welche zwischen einem ersten und einem zweiten primärseitigen Anschluss des Transformators (11) abgreifbar ist, kleiner als ein zweiter einstellbarer Spannungsgrenzwert (SPG2) ist.

**Claims**

**1.** A control arrangement (1) for a voltage converter for converting a first DC voltage (UBAT) into a second DC voltage (U-G),

comprising

- a first input (3) arranged for being coupled to a means for detecting a first current (I1) on a primary side of a transformer (11) serving for converting a first DC voltage (UBAT) into a second DC voltage (U-G),
- a first output (7) arranged for being coupled to a control terminal (17) of a transistor (16) which can be inserted in series with the primary side of the transformer (11), and for delivering a control signal (ST) to the control terminal (17) of the transistor (16),
- a computing unit (2) coupled to the first output (7) of the control arrangement (1) and arranged for setting the control signal (ST) such that the transistor (16) has a low resistance value in a switch-on phase with a switch-on duration (T-ON) and a high resistance value in a switch-off phase with a switch-off duration (T-OFF),
- a first comparator (42) comprising a first input which is coupled to the first input (3) of the control arrangement (1) and serves for feeding a value of the first current (I1) or a value derived from the value of the first current (I1), a second input for feeding an adjustable set point (SO1), and an output for delivering a first signal (S1) and being coupled to an input of the computing unit (2) for setting the switch-off duration (T-OFF), **characterized in that** the computing unit (2) comprises:

- a delay circuit (80) which is fed with the first signal (S1) designed for setting the switch-off duration (T-OFF), and
- a flip-flop (81) comprising an output which is coupled to a first input of the flip-flop (81) via the delay circuit (80).

2. The control arrangement according to claim 1,
wherein
the control arrangement (1) comprises a mean-value generator inserted between the first input (3) of the control arrangement (1) and the first input of the first comparator (42), for determining a mean value from the value of the first current (I1) and from at least one further value, temporally following in the switch-on phase, of the first current (I1).

3. The control arrangement according to claim 2,
wherein
the mean-value generator comprises a low-pass filter (40) or an integrator (41) for forming the mean value.

4. The control arrangement according to claim 1,
wherein
the control arrangement (1) comprises a delay device (44) inserted between the first input (3) of the control arrangement (1) and the first input of the first comparator (42), for determining the value of the first current (I1) by sampling the first current (I1) with an adjustable delay duration (T-V) with respect to the onset of the switch-on phase.

5. The control arrangement according to any one of claims 1 to 4,
wherein
the control arrangement (1) comprises an analog controller (43) for determining the switch-off duration (T-OFF), whose input side is coupled to an output of the first comparator (42) and whose output side is coupled to the computing unit (2).

6. The control arrangement according to any one of claims 1 to 5,
wherein
the control arrangement (1) comprises a second comparator (50) having a first input coupled to the first input (3) of the control arrangement (1) for feeding the first current (I1) or a signal derived from it, a second input for feeding an adjustable current limit value (SG1) and an output coupled to a further input of the computing unit (2) for switching the transistor (16) from the switch-on phase to the switch-off phase depending on the comparison of the first current (I1) or the signal derived from it in the switch-on phase with the adjustable current limit value (SG1).

7. The control arrangement according to any one of claims 1 to 6,
wherein
the control arrangement (1) comprises a second input (5) arranged for feeding a second voltage (U2) which can be tapped between first and second primary-side terminals (12, 13) of the transformer (11), or a voltage (U3) which may be derived from the second voltage (U2), and coupled to the computing unit (2).

8. The control arrangement according to claim 7,

wherein
the control arrangement (1) comprises a third comparator (61) which is coupled to the second input (5) of the control arrangement (1) at a first input, may be fed with a first adjustable voltage limit value (SPG1) at a second input, and has an output connected to the computing unit (2) for prolonging the switch-off phase by the adjustable prolongation duration (T-R) depending on the comparison of the second voltage (U2) or the voltage (U3) derived from it with the second adjustable voltage limit value (SPG2).

9. The control arrangement according to claim 7 or 8,
wherein
the control arrangement (1) comprises a fourth comparator (71) which is coupled to the second input (5) of the control arrangement (1) at a first input, may be fed with a second adjustable voltage limit value (SPG2) at a second input, and has an output connected to the computing unit (2) for setting the resistance value of the transistor (16) depending on the comparison of the second voltage (U2) or the voltage (U3) derived from it with the second adjustable voltage limit value (SPG2).

10. A voltage converter comprising a control arrangement according to any one of claims 1 to 9,
comprising:

   - the transformer (11),
   - the transistor (16),
   - the means for detecting a first current (I1) on a primary side of the transformer (11), comprising a first resistor (10) inserted in series connection with the primary side of the transformer (11) and in series connection with the controlled section of the transistor (16),
   - a rectifier circuit (21) which is coupled to a secondary side of the transformer (11) and at the output of which the second DC voltage (U-G) can be tapped,
   - the control arrangement (1) having its first input (3) coupled to a terminal of the first resistor (10) and its first output (7) coupled to the control terminal (17) of the transistor (16).

11. The voltage converter according to claim 7 and 10,
wherein
a second resistor (23) is inserted between the second input (5) of the control arrangement (1) and the second primary-side terminal (13) of the transformer (11).

12. The voltage converter according to claim 7 and 10 or according to claim 7 and 11,
wherein
a third resistor (24) is inserted between the second input (5) of the control arrangement (1) and the first primary-side terminal (12) of the transformer (11).

13. The voltage converter according to any one of claims 10 to 12,
wherein
the rectifier circuit (21) comprises:

   - a diode (25) comprising an anode connected to a secondary-side terminal (15) of the transformer (11), and
   - a capacitor (26) having a first electrode connected to a cathode of the diode (25), and a second electrode connected to a further secondary-side terminal (14) of the transformer (11), the second DC voltage (U-G) being able to be tapped between the first and second electrodes of the capacitor (26).

14. The voltage converter according to any one of claims 10 to 13,
wherein
the rectifier circuit (21) comprises a bridge rectifier circuit or a midpoint connection circuit.

15. A method of converting a first DC voltage (UBAT) into a second DC voltage (U-G), comprising the following steps:

   - storing energy in a transformer (11) by means of operating a transistor (16) in a low-impedance condition during a switch-on duration (T-ON) of a switch-on phase, wherein first and second primary-side terminals (12, 13) of the transformer (11) are supplied with the first DC voltage (UBAT) and the transistor (16) is inserted into one of the feed lines and a first current (I1) flows through a primary side of the transformer (11),
   - delivering energy at a secondary side of the transformer (11) by means of

- operating the transistor (16) in a high-impedance condition during a switch-off duration (T-OFF) of a switch-off phase, wherein the switch-off duration (T-OFF) is determined from a value of the first current (I1) in the switch-on phase or from a value which may be derived from the value of the first current (I1) in the switch-on phase, and
- generating the second voltage (U-G) by rectifying a second current (I2) delivered from the secondary side of the transformer,

wherein a value of the first current (I1) or a value which can be derived from the value of the first current (I1) is compared with an adjustable set point (SO1) by means of a first comparator (42) and a first signal (S1) is delivered at an output of the first comparator (42), said signal being provided for setting the switch-off duration (T-OFF) and being fed to a delay circuit (80) coupling an output of a flip-flop (81) to a first input of the flip-flop (81).

16. The method according to claim 15,
comprising the following steps:
determining a mean of the value which can be derived from the value of the first current (I1) and from at least one further value, temporally following in the switch-on phase, of the first current (I1) for determining the switch-off duration (T-OFF).

17. The method according to claim 15,
comprising the following steps:
determining the value of the first current (I1) in the switch-on phase by sampling the first current (I1) with an adjustable delay duration (T-V) with respect to the onset of the switch-on phase for determining the switch-off duration (T-OFF).

18. The method according to any one of claims 15 to 17,
comprising the following steps:

setting the switch-on duration (T-ON) such that the first current (I1), during the switch-on phase, has a smaller value than an adjustable first current limit value (SG1).

19. The method according to any one of claims 15 to 18,
comprising the following steps:

prolonging the switch-off phase by an adjustable prolongation duration (T-R) if the second DC voltage (U-G) in the switch-off phase has a larger value than an adjustable first voltage limit value (SPG1), and subsequent switching into the switch-on phase.

20. The method according to any one of claims 15 to 19,
comprising the following steps:

controlling the transistor (16) by setting the resistance value of a controlled section of the transistor (16) during the transition from the switch-on phase to the switch-off phase such that a second voltage (U2), which can be tapped between first and second primary-side terminals of the transformer (11), is smaller than a second adjustable voltage limit value (SPG2).

**Revendications**

1. Dispositif de commande (1) pour un convertisseur de tension destiné à convertir une première tension continue (UBAT) en une deuxième tension continue (U-G),
comportant

- une première entrée (3) configurée pour établir une liaison avec un moyen servant à saisir un premier courant (I1) au primaire d'un transformateur (11), lequel sert à convertir une première tension continue (UBAT) en une deuxième tension continue (U-G),
- une première sortie (7) configurée pour établir la liaison avec une borne de commande (17) d'un transistor (16), lequel est connectable en série avec le primaire du transformateur (11), et pour émettre un signal de commande (ST) vers la borne de commande (17) du transistor (16),
- une unité de calcul (2) reliée à la première sortie (7) du dispositif de commande (1), configurée pour régler le signal de commande (ST) de telle façon que le transistor (16) présente une faible valeur de résistance dans une phase de connexion ayant une durée de connexion (T-ON) et une valeur de résistance élevée dans une phase de déconnexion ayant une durée de déconnexion (T-OFF),

- un premier comparateur (42) doté d'une première entrée reliée à la première entrée (3) du dispositif de commande (1) pour l'amenée d'une valeur du premier courant (I1) ou d'une valeur dérivée de la valeur du premier courant (I1), d'une deuxième entrée pour l'amenée d'une valeur de consigne réglable (SO1), et d'une sortie pour l'émission d'un premier signal (S1), qui est reliée à une entrée de l'unité de calcul (2) pour le réglage de la durée de déconnexion (T-OFF),

**caractérisé en ce que** l'unité de calcul (2)

comprend :

- un montage temporisateur (80) auquel est amené le premier signal (S1) qui est conçu pour régler la durée de déconnexion (T-OFF), et
- un étage basculeur (81) comportant une sortie qui est reliée à la première entrée de l'étage basculeur (81) via le montage temporisateur (80).

2. Dispositif de commande selon la revendication 1,
où le dispositif de commande (1) présente un calculateur de moyenne connecté entre la première entrée (3) du dispositif de commande (1) et la première entrée du premier comparateur (42) pour la détermination d'une valeur moyenne à partir de la valeur du premier courant (I1) et à partir d'au moins une autre valeur du premier courant (I1) chronologiquement consécutive dans la phase de connexion.

3. Dispositif de commande selon la revendication 2,
où le calculateur de moyenne comportant un filtre passe-bas (40) ou un intégrateur (41) pour la détermination de la valeur moyenne.

4. Dispositif de commande selon la revendication 1,
où le dispositif de commande (1) comporte un dispositif temporisateur (44) connecté entre la première entrée (3) du dispositif de commande (1) et la première entrée du premier comparateur (42) pour la détermination de la valeur du premier courant (I1) par balayage du premier courant (I1) avec une durée de temporisation réglable (T-V) par rapport au début de la phase de connexion.

5. Dispositif de commande selon l'une des revendications 1 à 4,
où le dispositif de commande (1) comporte un régleur analogique (43) pour la détermination de la durée de déconnexion (T-OFF), relié en entrée à une sortie du premier comparateur (42) et en sortie à l'unité de calcul (2).

6. Dispositif de commande selon l'une des revendications 1 à 5,
où le dispositif de commande (1) comporte un deuxième comparateur (50) doté d'une première entrée reliée à la première entrée (3) du dispositif de commande (1) pour l'amenée du premier courant (I1) ou d'un signal dérivé de celui-ci, d'une deuxième entrée pour l'amenée d'une valeur limite de courant réglable (SG1), et d'une sortie reliée à une autre entrée de l'unité de calcul (2) pour la commutation du transistor (16) de la phase de connexion à la phase de déconnexion en fonction de la comparaison du premier courant (I1) ou du signal dérivé de celui-ci dans la phase de connexion avec la valeur limite de courant réglable (SG1).

7. Dispositif de commande selon l'une des revendications 1 à 6,
où le dispositif de commande (1) comporte une deuxième entrée (5) configurée pour amener une deuxième tension (U2) pouvant être prélevée entre une première et une deuxième borne du primaire (12, 13) du transformateur (11), ou une tension (U3) dérivable de la deuxième tension (U2), et reliée à l'unité de calcul (2).

8. Dispositif de commande selon la revendication 7,
où le dispositif de commande (1) comporte un troisième comparateur (61) qui est relié par une première entrée à la deuxième entrée (5) du dispositif de commande (1), auquel une première valeur limite de tension réglable (SPG1) peut être amenée via une deuxième entrée, et qui est relié par une sortie à l'unité de calcul (2) pour la prolongation de la durée de déconnexion moyennant la durée de prolongation réglable (T-R) en fonction de la comparaison de la deuxième tension ou de la tension dérivée de celle-ci (U2, U3) et de la deuxième valeur limite de tension réglable (SPG2).

9. Dispositif de commande selon la revendication 7 ou 8,

où le dispositif de commande (1) comporte un quatrième comparateur (71) qui est relié par une première entrée à la deuxième entrée (5) du dispositif de commande (1), auquel une deuxième valeur limite de tension réglable (SPG2) peut être amenée via une deuxième entrée, et qui est relié par une sortie à l'unité de calcul (2) pour le réglage de la valeur de résistance du transistor (16) en fonction de la comparaison de la deuxième tension ou de la tension dérivée de celle-ci (U2, U3) et de la deuxième valeur limite de tension réglable (SPG2).

**10.** Convertisseur de tension comprenant un dispositif de commande selon l'une des revendications 1 à 9, comportant :

- le transformateur (11),
- le transistor (16),
- le moyen servant à saisir un premier courant (I1) au primaire d'un transformateur (11), comportant une première résistance (10) connectée en série avec le primaire du transformateur (11) et en série avec la portion commandée du transistor (16),
- un montage redresseur (21) qui est relié à un secondaire du transformateur (11) et à la sortie duquel la deuxième tension continue (U-G) peut être prélevée,
- le dispositif de commande (1) qui est relié par sa première entrée (3) à une borne de la première résistance (10) et par sa première sortie (7) à la borne de commande (17) du transistor (16).

**11.** Convertisseur de tension selon les revendications 7 et 10,
où une deuxième résistance (23) est connectée entre la deuxième entrée (5) du montage de commande (1) et la deuxième borne du primaire (13) du transformateur (11).

**12.** Convertisseur de tension selon les revendications 7 et 10 ou selon les revendications 7 et 11,
où une troisième résistance (24) est connectée entre la deuxième entrée (5) du montage de commande (1) et la première borne du primaire (12) du transformateur (11).

**13.** Convertisseur de tension selon l'une des revendications 10 à 12,
où le montage redresseur (21) comporte :

- une diode (25) comportant une anode qui est reliée à une borne du secondaire (15) du transformateur (11), et
- un condensateur (26) comportant une première électrode qui est reliée à une cathode de la diode (25) et une deuxième électrode qui est reliée à une autre borne du secondaire (14) du transformateur (11), la deuxième tension continue (U-G) pouvant être prélevée entre la première et la deuxième électrode du condensateur (26).

**14.** Convertisseur de tension selon l'une des revendications 10 à 13,
où le montage redresseur (21) comporte un montage redresseur en pont ou un montage à point milieu.

**15.** Procédé de conversion d'une première tension continue (UBAT) en une deuxième tension continue (U-G), comportant les étapes suivantes :

- stockage d'énergie dans un transformateur (11) moyennant l'exploitation d'un transistor (16) dans un état de basse impédance pendant une durée de connexion (T-ON) d'une phase de connexion, la première tension continue (UBAT) étant amenée à une première et une deuxième borne du primaire (12, 13) du transformateur (11) et le transistor (16) étant connecté à l'une des amenées et un premier courant (I1) parcourant un primaire du transformateur (11),
- émission d'énergie au niveau d'un secondaire du transformateur (11) moyennant

    - exploitation du transistor (16) dans un état de haute impédance pendant ue durée de déconnexion (T-OFF) d'une phase de déconnexion, la durée de déconnexion (T-OFF) étant déterminée à partir d'une valeur du premier courant (I1) dans la phase de connexion ou à partir d'une valeur dérivable de la valeur du premier courant (I1) dans la phase de connexion, et
    - génération de la deuxième tension (U-G) par redressement d'un deuxième courant (I2) émis par le secondaire du transformateur,

une valeur du premier courant (I1) ou une valeur dérivable de la valeur du premier courant (I1) étant comparée à une valeur de consigne réglable (SO1) moyennant un premier comparateur (42) et un premier signal (S1) étant émis sur une sortie du premier comparateur (42), lequel signal est prévu pour le réglage de la durée de déconnexion (T-OFF) et amené à un montage temporisateur (80) qui relie une sortie de l'étage basculeur (81) à une première entrée de l'étage basculeur (81).

**16.** Procédé selon la revendication 15,
comportant les étapes suivantes :

détermination d'une valeur moyenne de la valeur dérivable de la valeur du premier courant (I1) et d'au moins une autre valeur du premier courant (I1) chronologiquement consécutive dans la phase de connexion pour la détermination de la durée de déconnexion (T-OFF).

**17.** Procédé selon la revendication 15,
comportant les étapes suivantes :

détermination de la valeur du premier courant (I1) dans la phase de connexion par balayage du premier courant (I1) avec une durée de temporisation réglable (T-V) par rapport au début de la phase de connexion pour la détermination de la durée de déconnexion (T-OFF).

**18.** Procédé selon l'une des revendications 15 à 17,
comportant les étapes suivantes :

réglage de la durée de connexion (T-ON) de telle façon que le premier courant (I1) soit numériquement plus petit qu'une première valeur limite de courant réglable (SG1) pendant la phase de connexion.

**19.** Procédé selon l'une des revendications 15 à 18,
comportant les étapes suivantes :

prolongation de la durée de déconnexion moyennant une durée de prolongation réglable (T-R) si la deuxième tension continue (U-G) est numériquement plus grande qu'une valeur limite de tension réglable (SPG1) dans la phase de déconnexion, et commutation consécutive sur la phase de connexion.

**20.** Procédé selon l'une des revendications 15 à 19,
comportant les étapes suivantes :

commande du transistor (16) par réglage de la valeur de résistance d'une portion commandée du transistor (16) pendant la transition de la phase de connexion à la phase de déconnexion de telle façon qu'une deuxième tension (U2) pouvant être prélevée entre une première et une deuxième borne du primaire du transformateur (11) soit plus petite qu'une deuxième valeur limite de tension réglable (SPG2).

# FIG 1A

# FIG 1B

U-BAT

8

24  23  U2

U3

12  11  I2

15  25

26  U-6

6  5

Σ
− +

60  7  ST

61
S3

2

16

17  10

SPG1

40

3  U1  I1

8

71
S4  S1
+  42  SO1

SPG2

S2

8  50  SG1

4

1  8

8

EP 1 920 525 B1

## FIG 2A

S1 · 42 · 41 · 3 · SO1 · 8 · U1 · 8

## FIG 2B

S1 · 42 · 44 · 3 · SO1 · 8 · U1 · 8

## FIG 2C

S1 · 43 · 42 · 40 · TP · SO1 · 8 · 3 · U1 · 8

## FIG 2D

S1 · 43 · 42 · 41 · ∫dt · SO1 · 8 · 3 · U1 · 8

## FIG 2E

S1 · 43 · 42 · 44 · T-V · SO1 · 8 · 3 · U1 · 8

FIG 3

FIG 4

FIG 5

EP 1 920 525 B1

**EP 1 920 525 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 6518733 B1
- US 20030141853 A